(19) **Europäisches Patentamt / European Patent Office / Office européen des brevets**

(11) **EP 4 496 415 A1**

(12) **EUROPEAN PATENT APPLICATION**
published in accordance with Art. 153(4) EPC

(43) Date of publication:
**22.01.2025 Bulletin 2025/04**

(21) Application number: **23758200.2**

(22) Date of filing: **17.03.2023**

(51) International Patent Classification (IPC):
*H04W 72/25* (2023.01)   *H04W 76/11* (2018.01)
*H04L 1/18* (2023.01)   *H04W 92/18* (2009.01)

(52) Cooperative Patent Classification (CPC):
H04L 1/18; H04W 72/25; H04W 76/11; H04W 92/18

(86) International application number:
**PCT/KR2023/003600**

(87) International publication number:
**WO 2023/177264 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.03.2022   US 202263320710 P
17.03.2022   US 202263320711 P**

(71) Applicant: **LG ELECTRONICS, INC.
Seoul 07336 (KR)**

(72) Inventor: **KO, Woosuk
Seoul 06772 (KR)**

(74) Representative: **Maikowski & Ninnemann
Patentanwälte Partnerschaft mbB
Postfach 15 09 20
10671 Berlin (DE)**

(54) **METHOD AND DEVICE FOR PERFORMING WIRELESS COMMUNICATION ON BASIS OF COT IN NR V2X**

(57)    Proposed are a method for a first device to perform wireless communication and a device sup porting same. For example, the first device may receive, from a second device, a first SCI, for scheduli ng of a physical sidelink shared channel (PSSCH) and second sidelink control information (SCI), throu gh a physical side link control channel (PSCCH). For example, the first device may receive, from the s econd device, the second SCI through the PSSCH. For example, the second SCI includes a destination ID. For example, the first device may determine whether to use a channel occupancy time (COT) share d from the second device, based on the destination ID included in the second SCI.

## FIG. 15

**Description**

**FIELD**

This disclosure relates to a wireless communication system.

**BACKGROUND**

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PCS interface and/or Uu interface.
Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

**SUMMARY OF THE DISCLOSURE**

Technical Solutions

According to an embodiment of the present disclosure, a method for performing wireless communication by a first device may be proposed. For example, the first device may receive, from a second device, a first SCI, for scheduling of a physical sidelink shared channel (PSSCH) and second sidelink control information (SCI), through a physical sidelink control channel (PSCCH). For example, the first device may receive, from the second device, the second SCI through the PSSCH. For example, the second SCI includes a destination ID. For example, the first device may determine whether to use a channel occupancy time (COT) shared from the second device, based on the destination ID included in the second SCI.
According to an embodiment of the present disclosure, a first device adapted to perform wireless communication may be proposed. For example, the first device may include one or more processors; one or more transceivers; and one or more memories connected to the one or more processors and storing instructions that, based on being executed, cause the one or more processors to perform operations. For example, the operations include at least one of:
receiving, from a second device, a first SCI, for scheduling of a physical sidelink shared channel (PSSCH) and second sidelink control information (SCI), through a physical sidelink control channel (PSCCH); receiving, from the second device, the second SCI through the PSSCH, wherein the second SCI includes a destination ID; and/or determining whether to use a channel occupancy time (COT) shared from the second device, based on the destination ID included in the second SCI.
According to an embodiment of the present disclosure, a processing device adapted to control a first device may be proposed. For example, the processing device may comprise: one or more processors; and one or more memories operably connectable to the one or more processors and storing instructions that, based on being executed, cause the one or more processors to perform operations. For example, the operations may comprise at least one of:
receiving, from a second device, a first SCI, for scheduling of a physical sidelink shared channel (PSSCH) and second sidelink control information (SCI), through a physical sidelink control channel (PSCCH); receiving, from the second device, the second SCI through the PSSCH, wherein the second SCI includes a destination ID; and/or determining whether to use a channel occupancy time (COT) shared from the second device, based on the destination ID included in the second SCI.
According to an embodiment of the present disclosure, at least one non-transitory computer-readable storage medium storing instructions may be proposed. For example, the instructions that, based on being executed by at least one processor, cause a first device to perform operations. For example, the operations may include at least one of:
receiving, from a second device, a first SCI, for scheduling of a physical sidelink shared channel (PSSCH) and second sidelink control information (SCI), through a physical sidelink control channel (PSCCH); receiving, from the second device, the second SCI through the PSSCH, wherein the second SCI includes a destination ID; and/or determining whether to use a channel occupancy time (COT) shared from the second device, based on the destination ID included in the second SCI.

According to an embodiment of the present disclosure, a method for performing wireless communication by a second device may be proposed. For example, the second device may transmit, to a first device, a first SCI, for scheduling of a physical sidelink shared channel (PSSCH) and second sidelink control information (SCI), through a physical sidelink control channel (PSCCH). For example, the second device may transmit, to the first device, the second SCI through the PSSCH. For example, the second SCI may include a destination ID. For example, whether to use a channel occupancy time (COT) shared from the second device may be determined, based on the destination ID included in the second SCI.

According to an embodiment of the present disclosure, A second device adapted to perform wireless communication may be proposed. For example, the second device may comprise: one or more processors; one or more transceivers; and one or more memories connected to the one or more processors and storing instructions that, based on being executed, cause the one or more processors to perform operations. For example, the operations may include at least one of:

transmitting, to a first device, a first SCI, for scheduling of a physical sidelink shared channel (PSSCH) and second sidelink control information (SCI), through a physical sidelink control channel (PSCCH); and/or transmitting, to the first device, the second SCI through the PSSCH. For example, the second SCI may include a destination ID. For example, whether to use a channel occupancy time (COT) shared from the second device may be determined, based on the destination ID included in the second SCI.

According to an embodiment of the present disclosure, a processing device adapted to control a second device may be proposed. For example, the processing device may comprise: one or more processors; and one or more memories connected to the one or more processors and storing instructions that, based on being executed, cause the one or more processors to perform operations. For example, the operations may include at least one of:

transmitting, to a first device, a first SCI, for scheduling of a physical sidelink shared channel (PSSCH) and second sidelink control information (SCI), through a physical sidelink control channel (PSCCH); and/or transmitting, to the first device, the second SCI through the PSSCH. For example, the second SCI may include a destination ID. For example, whether to use a channel occupancy time (COT) shared from the second device may be determined, based on the destination ID included in the second SCI.

According to an embodiment of the present disclosure, at least one non-transitory computer-readable storage medium storing instructions may be proposed. For example, the instructions, based on being executed by at least one processor, cause a second device to perform operations. For example, the operations may include at least one of:

transmitting, to a first device, a first SCI, for scheduling of a physical sidelink shared channel (PSSCH) and second sidelink control information (SCI), through a physical sidelink control channel (PSCCH); and/or transmitting, to the first device, the second SCI through the PSSCH. For example, the second SCI may include a destination ID. For example, whether to use a channel occupancy time (COT) shared from the second device may be determined, based on the destination ID included in the second SCI.

**BRIEF** DESCRIPTION OF THE DRAWINGS

FIG. 1 shows a structure of an NR system, based on an embodiment of the present disclosure.

FIG. 2 shows a radio protocol architecture, based on an embodiment of the present disclosure.

FIG. 3 shows a structure of a radio frame of an NR, based on an embodiment of the present disclosure.

FIG. 4 shows a structure of a slot of an NR frame, based on an embodiment of the present disclosure.

FIG. 5 shows an example of a BWP, based on an embodiment of the present disclosure.

FIG. 6 shows a procedure of performing V2X or SL communication by a UE based on a transmission mode, based on an embodiment of the present disclosure.

FIG. 7 shows three cast types, based on an embodiment of the present disclosure.

FIG. 8 shows a method for performing PPS, by a UE, in accordance with an embodiment of the present disclosure.

FIG. 9 shows a method for performing PPS, by a UE, in accordance with an embodiment of the present disclosure.

FIG. 10 shows a method for performing CPS, by a UE, in accordance with an embodiment of the present disclosure.

FIG. 11 shows a synchronization source or synchronization reference of V2X, based on an embodiment of the present disclosure.

FIG. 12 shows CAP operations performed by a base station to transmit a downlink signal through an unlicensed band, based on an embodiment of the present disclosure.

FIG. 13 is a diagram to explain a problem with a method of performing wireless communications based on a COT, according to one embodiment of the present disclosure.

FIG. 14 is a diagram to explain a method of performing wireless communication based on a COT, according to one embodiment of the present disclosure.

FIG. 15 shows a method for performing wireless communication by a first device, based on an embodiment of the present disclosure.

FIG. 16 shows a method for performing wireless communication by a second device, based on an embodiment of the present disclosure.

FIG. 17 shows a communication system 1, based on an embodiment of the present disclosure.

FIG. 18 shows wireless devices, based on an embodiment of the present disclosure.

FIG. 19 shows a signal process circuit for a transmission signal, based on an embodiment of the present disclosure.

FIG. 20 shows another example of a wireless device, based on an embodiment of the present disclosure.

FIG. 21 shows a hand-held device, based on an embodiment of the present disclosure.

FIG. 22 shows a vehicle or an autonomous vehicle, based on an embodiment of the present disclosure.

## DESCRIPTION OF EXEMPLARY EMBODIMENTS

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

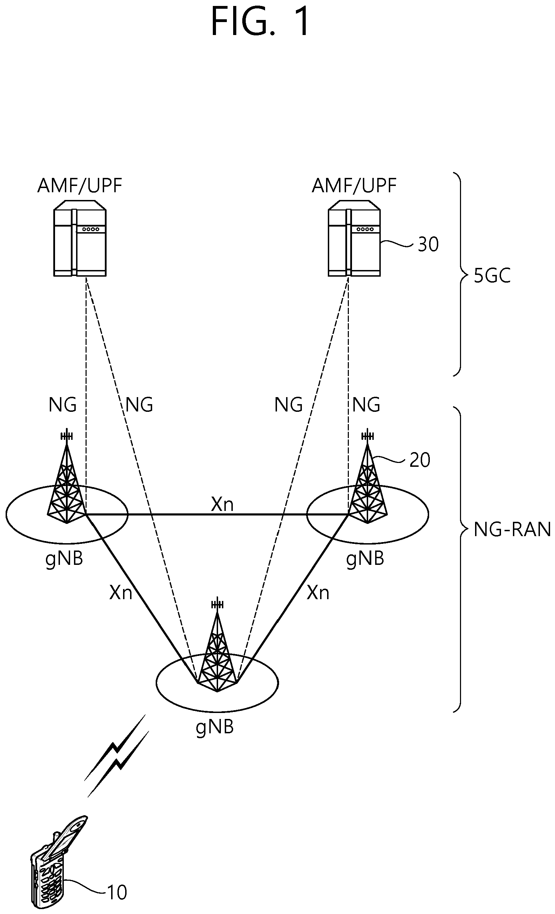

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

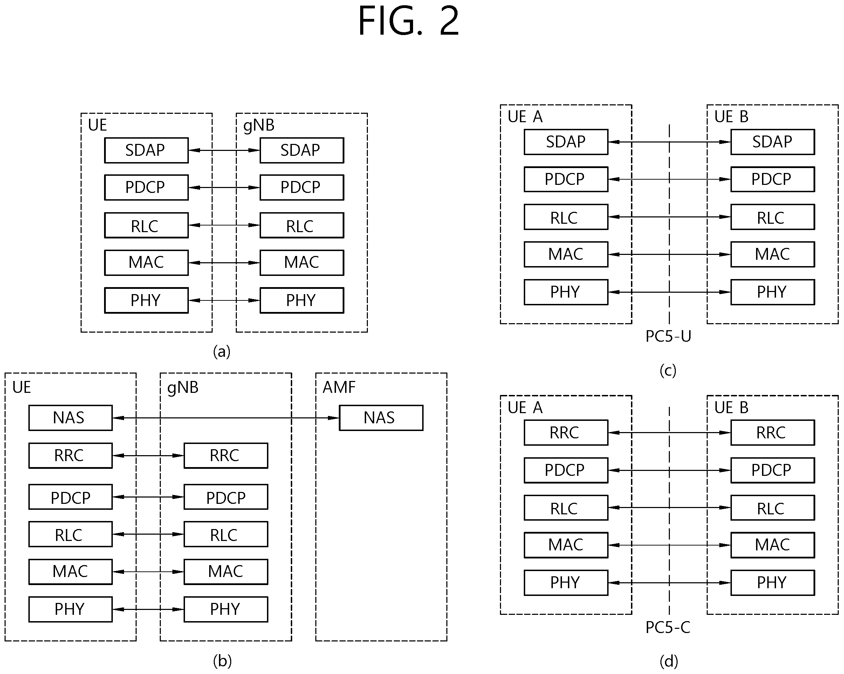

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

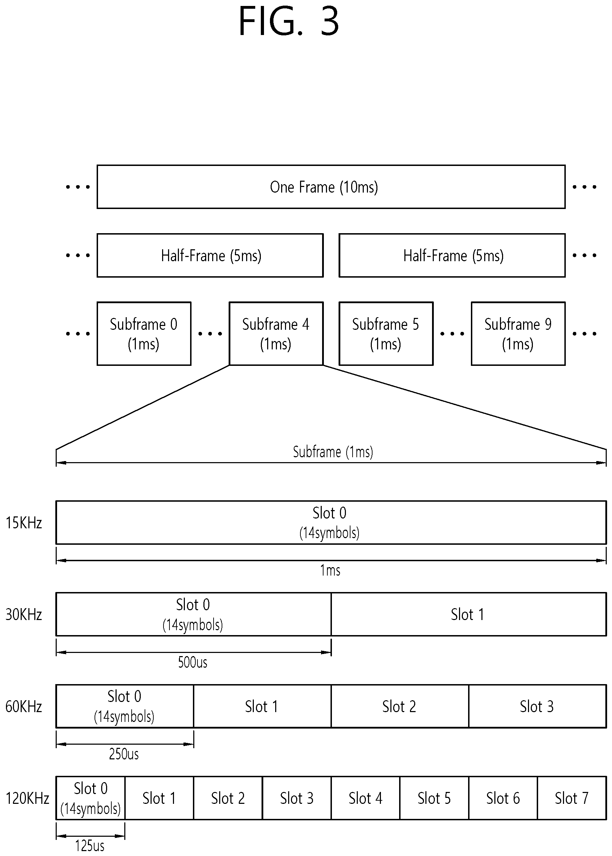

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (Nslotsymb), a number slots per frame (Nframe,uslot), and a number of slots per subframe (Nsubframe,uslot) based on an SCS configuration (u), in a case where a normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz ! |

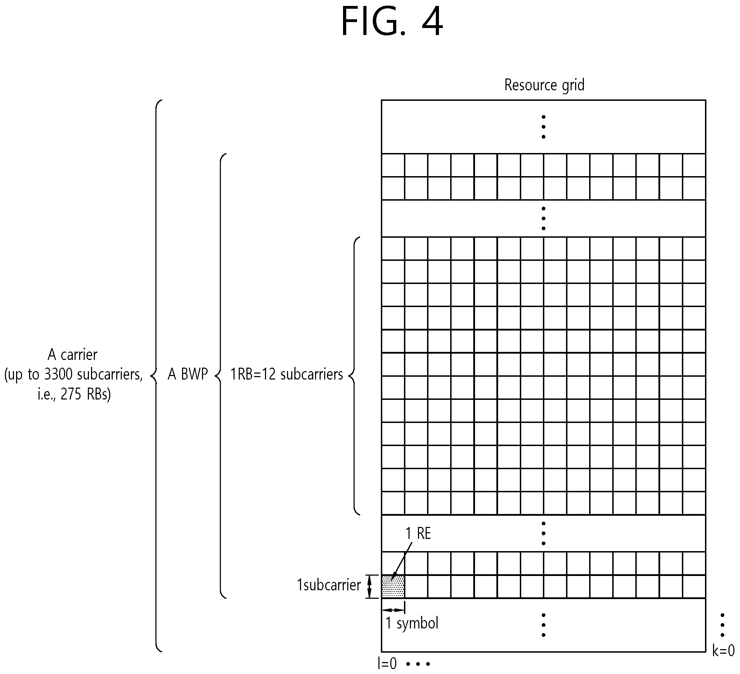

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

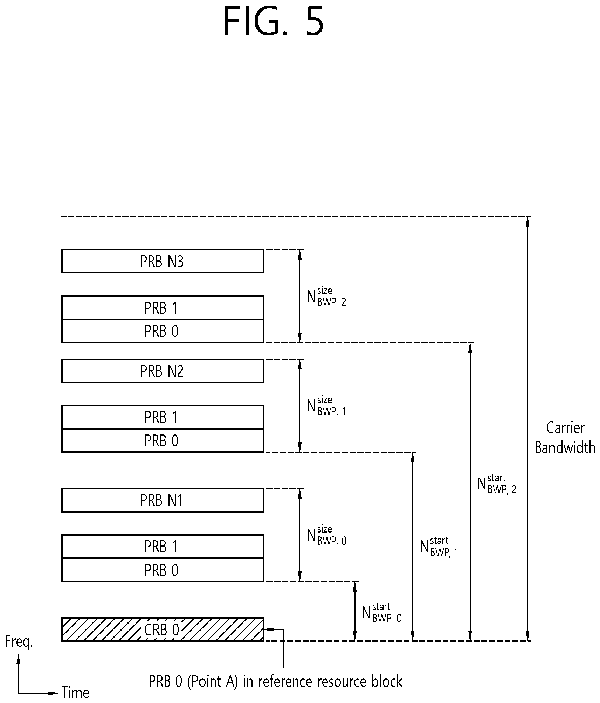

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

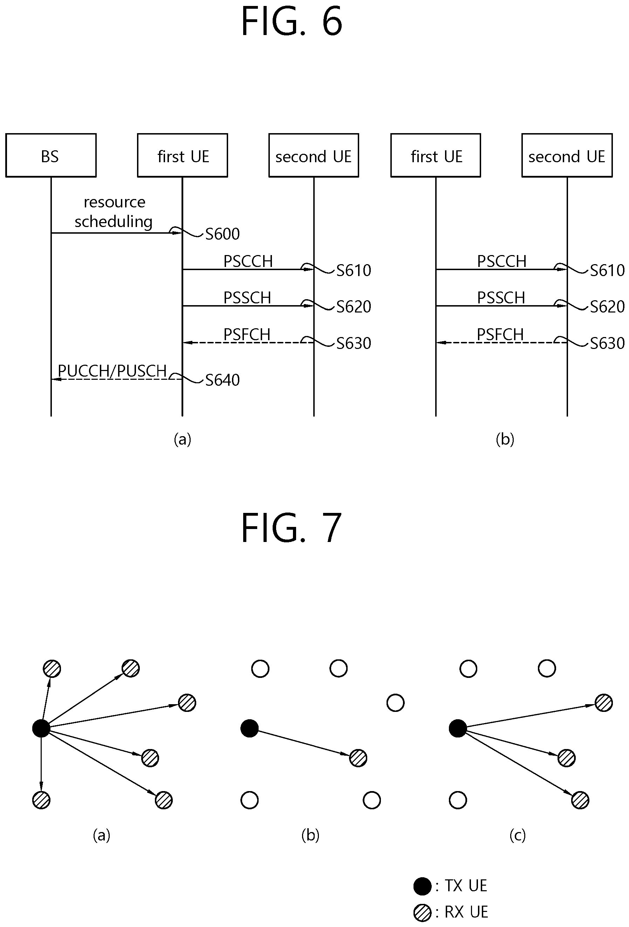

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:

- Resource pool index - ceiling (log2 I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling (log2(NSLsubChannel)) bits
- SCI format 1-A fields: frequency resource assignment, time resource assignment
- PSFCH-to-HARQ feedback timing indicator - ceiling (log2 Nfb_timing) bits, where Nfb_timing is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH.

Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits

- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)$ $(2N^{SL}_{subChannel}+1)/6)$ bits when the value of the higher layer parameter sl-MaxNumPerReserve is configured to 3

- Time resource assignment - 5 bits when the value of the higher layer parameter sl-MaxNumPerReserve is configured to 2; otherwise 9 bits when the value of the higher layer parameter sl-MaxNumPerReserve is configured to 3

- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise

- DMRS pattern - ceiling $(\log_2 N_{pattern})$ bits, where $N_{pattern}$ is the number of DMRS patterns configured by higher layer parameter sl-PSSCH-DMRS-TimePatternList

- 2nd-stage SCI format - 2 bits as defined in Table 5

- Beta_offset indicator - 2 bits as provided by higher layer parameter sl-BetaOffsets2ndSCI

- Number of DMRS port - 1 bit as defined in Table 6

- Modulation and coding scheme - 5 bits

- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise

- PSFCH overhead indication - 1 bit if higher layer parameter sl-PSFCH-Period = 2 or 4; 0 bit otherwise

- Reserved - a number of bits as determined by higher layer parameter sl-NumReservedBits, with value set to zero.

[Table 5]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

[Table 6]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits

- New data indicator - 1 bit

- Redundancy version - 2 bits

- Source ID - 8 bits

- Destination ID - 16 bits

- HARQ feedback enabled/disabled indicator - 1 bit

- Cast type indicator - 2 bits as defined in Table 7

- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits

- New data indicator - 1 bit

- Redundancy version - 2 bits

- Source ID - 8 bits

- Destination ID - 16 bits

- HARQ feedback enabled/disabled indicator - 1 bit

- Zone ID - 12 bits

- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

FIG. 7 shows three cast types, based on an embodiment of the present disclosure. The embodiment of FIG. 7 may be combined with various embodiments of the present disclosure. Specifically, (a) of FIG. 7 shows broadcast-type SL communication, (b) of FIG. 7 shows unicast type-SL communication, and (c) of FIG. 7 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.

(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.

(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Hereinafter, UE procedure for determining the subset of resources to be reported to higher layers in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;

- L1 priority, $prio_{TX}$;

- the remaining packet delay budget;

- the number of sub-channels to be used for the PSSCH/PSCCH transmission in a slot, $L_{subCH}$;

- optionally, the resource reservation interval, $P_{rsvp\_TX}$, in units of msec.

- if the higher layer requests the UE to determine a subset of resources from which the higher layer will select resources for PSSCH/PSCCH transmission as part of re-evaluation or pre-emption procedure, the higher layer provides a set of resources $(r_0, r_1, r_2, ...)$ which may be subject to re-evaluation and a set of resources $(r'_0, r'_1, r'_2, ...)$ which may be subject to pre-emption.

- it is up to UE implementation to determine the subset of resources as requested by higher layers before or after the slot $r_i''$ - $T_3$, where $r_i''$ is the slot with the smallest slot index among $(r_0, r_1, r_2, ...)$ and $(r'_0, r'_1, r'_2, ...)$, and $T_3$ is equal to $T^{SL}_{proc,1}$, where $T^{SL}_{proc,1}$ is the number of slots determined based on the SCS configuration of the SL BWP.

The following higher layer parameters affect this procedure:

- sl-SelectionWindowList: internal parameter $T_{2min}$ is set to the corresponding value from higher layer parameter sl-SelectionWindowList for the given value of $prio_{TX}$.

- sl-Thres-RSRP-List: this higher layer parameter provides an RSRP threshold for each combination $(p_i, p_j)$, where pi is the value of the priority field in a received SCI format 1-A and $p_j$ is the priority of the transmission of the UE selecting resources; for a given invocation of this procedure, $p_j = prio_{TX}$.

- sl-RS-ForSensing selects if the UE uses the PSSCH-RSRP or PSCCH-RSRP measurement.

- sl-ResourceReservePeriodList

- sl-SensingWindow: internal parameter $T_0$ is defined as the number of slots corresponding to sl-SensingWindow msec.

- sl-TxPercentageList: internal parameter X for a given $prio_{TX}$ is defined as sl-TxPercentageList ($prio_{TX}$) converted from percentage to ratio.

- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$.

Notation:

$(t'^{SL}_0, t'^{SL}_1, t'^{SL}_2, ...)$ denotes the set of slots which belongs to the sidelink resource pool.

For example, the UE may select a set of candidate resources ($S_A$) based on Table 8. For example, if resource (re) selection is triggered, the UE may select a set of candidate resources ($S_A$) based on Table 11. For example, if re-evaluation or pre-emption is triggered, the UE may select a set of candidate resources ($S_A$) based on Table 8.

[Table 8]

| The following steps are used: |
|---|
| 1) A candidate single-slot resource for transmission $R_{x,y}$ is defined as a set of $L_{subCH}$ contiguous sub-channels with sub-channel $x+j$ in slot $t'^{SL}_y$ where $j = 0,..., L_{subCH} - 1$. The UE shall assume that any set of $L_{subCH}$ contiguous sub-channels included in the corresponding resource pool within the time interval $[n + T_1, n + T_2]$ correspond to one candidate single-slot resource, where<br><br>  - selection of $T_1$ is up to UE implementation under $0 \leq T_1 \leq T^{SL}_{proc,1}$, where $T^{SL}_{proc,1}$ is defined in slots in Table 8.1.4-2 where $\mu_{SL}$ is the SCS configuration of the SL BWP;<br>  - if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).<br>  The total number of candidate single-slot resources is denoted by $M_{total}$.<br><br>2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots. |

(continued)

3) The internal parameter $Th(p_i, p_j)$ is set to the corresponding value of RSRP threshold indicated by the i-th field in *sl-Thres-RSRP-List,* where $i = p_i + (p_j - 1) * 8$.

4) The set $S_A$ is initialized to the set of all the candidate single-slot resources.

5) The UE shall exclude any candidate single-slot resource $R_{x,y}$ from the set $S_A$ if it meets all the following conditions:

- the UE has not monitored slot $t'^{SL}_m$ in Step 2.

- for any periodicity value allowed by the higher layer parameter *sl-ResourceReservePeriodList* and a hypothetical SCI format 1-A received in slot $t'^{SL}_m$ with *resource reservation period'* field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t'^{SL}_m$, and *'Resource reservation period'* field, if present, and *'Priority'* field in the received SCI format 1-A indicate the values $P_{rsvp\_RX}$ and $prio_{RX}$, respectively;

b) the RSRP measurement performed, for the received SCI format 1-A, is higher than $Th(prio_{RX}, prio_{TX})$;

c) the SCI format received in slot $t'^{SL}_m$ or the same SCI format which, if and only if the *'Resource reservation period'* field is present in the received SCI format 1-A, is assumed to be received in slot(s) $t'^{SL}_{m+q \times P'_{rsvp\_RX}}$ determines the set of resource blocks and slots which overlaps with $R_{x,y+j \times P'_{rsvp\_TX}}$ for q=1, 2, ..., $Q$ and $j$ =0, 1, ..., $C_{resel}$ - 1. Here, $P'_{rsvp\_RX}$ is $P_{rsvp\_RX}$ converted to units of logical slots, $Q = \left\lceil \frac{T_{scal}}{P_{rsvp\_RX}} \right\rceil$ if $P_{rsvp\_RX}$ < $T_{scal}$ and $n' - m \leq P'_{rsvp\_RX}$, where $t'^{SL}_{n'} = n$ if slot $n$ belongs to the set ($t'^{SL}_0, t'^{SL}_1, ..., t'^{SL}_{T'max-1}$), otherwise slot $t'^{SL}_{n'}$ is the first slot after slot $n$ belonging to the set ($t'^{SL}_0, t'^{SL}_1, ..., t'^{SL}_{T'max-1}$); otherwise $Q$ = 1. $T_{scal}$ is set to selection window size $T_2$ converted to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.

The UE shall report set $S_A$ to higher layers.

If a resource $r_i$ from the set ($r_0, r_1, r_2, ...$) is not a member of $S_A$, then the UE shall report re-evaluation of the resource $r_i$ to higher layers.

If a resource $r'_i$ from the set ($r'_0, r'_1, r'_2, ...$) meets the conditions below then the UE shall report pre-emption of the resource $r'_i$ to higher layers

- $r'_i$ is not a member of $S_A$, and
- $r'_i$ meets the conditions for exclusion in step 6, with $Th(prio_{RX}, prio_{TX})$ set to the final threshold after executing steps 1)-7), i.e. including all necessary increments for reaching $X \cdot M_{total}$, and
- the associated priority $prio_{RX}$, satisfies one of the following conditions:

- *sl-PreemptionEnable* is provided and is equal to 'enabled' and $prio_{TX} > prio_{RX}$
- *sl-PreemptionEnable* is provided and is not equal to 'enabled', and $prio_{RX} < prio_{pre}$ and $prio_{TX} > prio_{RX}$

Meanwhile, partial sensing may be supported for power saving of the UE. For example, in LTE SL or LTE V2X, the UE may perform partial sensing based on Tables 9 and 10.

[Table 9]

In sidelink transmission mode 4, when requested by higher layers in subframe n for a carrier, the UE shall determine the set of resources to be reported to higher layers for PSSCH transmission according to the steps described in this Subclause. Parameters $L_{subCH}$ the number of sub-channels to be used for the PSSCH transmission in a subframe, $P_{rsvp\_TX}$ the resource reservation interval, and $prio_{TX}$ the priority to be transmitted in the associated SCI format 1 by the UE are all provided by higher layers.

In sidelink transmission mode 3, when requested by higher layers in subframe n for a carrier, the UE shall determine the set of resources to be reported to higher layers in sensing measurement according to the steps described in this Subclause. Parameters $L_{subCH}$, $P_{rsvp\_TX}$ and $prio_{TX}$ are all provided by higher layers. $C_{resel}$ is determined by $C_{resel}$ =10*SL_RESOURCE_RESELECTION_COUNTER, where SL_RESOURCE_RESELECTION_COUNTER is provided by higher layers.

If partial sensing is configured by higher layers then the following steps are used:

1) A candidate single-subframe resource for PSSCH transmission $R_{x,y}$ is defined as a set of $L_{subCH}$ contiguous sub-channels with sub-channel x+j in subframe $t_y^{SL}$ where $j = 0,..., L_{subCH}$ -1 . The UE shall determine by its implementation a set of subframes which consists of at least Y subframes within the time interval [$n + T_1$, $n + T_2$] where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement and Y shall be greater than or equal to the high layer parameter *minNumCandidateSF*. The UE shall assume that any set of $L_{subCH}$ contiguous sub-channels included in the corresponding PSSCH resource pool within the determined set of subframes correspond to one candidate single-subframe resource. The total number of the candidate single-subframe resources is denoted by $M_{total}$.

2) If a subframe $t_y^{SL}$ is included in the set of subframes in Step 1, the UE shall monitor any subframe $t_{y-k \times P_{step}}^{SL}$ if k-th bit of the high layer parameter *gapCandidateSensing* is set to 1. The UE shall perform the behaviour in the following steps based on PSCCH decoded and S-RSSI measured in these subframes.

3) The parameter $Th_{a,b}$ is set to the value indicated by the i-th *SL-ThresPSSCH-RSRP* field in *SL-ThresPSSCH-RSRP-List* where i = (a - 1) * 8 + b.

4) The set $S_A$ is initialized to the union of all the candidate single-subframe resources. The set $S_B$ is initialized to an empty set.

5) The UE shall exclude any candidate single-subframe resource $R_{x,y}$ from the set $S_A$ if it meets all the following conditions:

- the UE receives an SCI format 1 in subframe $t_m^{SL}$, and "Resource reservation" field and "Priority" field in the received SCI format 1 indicate the values $P_{rsvp\_RX}$ and $prio_{RX}$, respectively.
- PSSCH-RSRP measurement according to the received SCI format 1 is higher than $Th_{prioTX,prioRX}$.
- the SCI format received in subframe $t_m^{SL}$ or the same SCI format 1 which is assumed to be received in subframe(s) $t_{m+q \times P_{step} \times P_{rsvp\_RX}}^{SL}$ determines according to 14.1.1.4C the set of resource blocks and subframes which overlaps with $R_{x,y+j \times P'_{rsvp\_TX}}$ for q=1, 2, ..., Q and j-0, 1, ..., $C_{resel}$ - 1 . Here, $Q = \dfrac{1}{P_{rsvp\_RX}}$ if $P_{rsvp\_RX} < 1$ and $y'-m \leq P_{step} \times P_{rsvp\_RX} + P_{step}$, where $t_{y'}^{SL}$ is the last subframe of the Y subframes, and Q = 1 otherwise.

(continued)

6) If the number of candidate single-subframe resources remaining in the set $S_A$ is smaller than $0.2 \cdot M_{total}$, then Step 4 is repeated with $Th_{a,b}$ increased by 3 dB.

[Table 10]

7) For a candidate single-subframe resource $R_{x,y}$ remaining in the set $S_A$, the metric $E_{x,y}$ is defined as the linear average of S-RSSI measured in sub-channels $x+k$ for $k = 0,..., L_{subCH} -1$ in the monitored subframes in Step 2 that can be expressed by $t^{SL}_{y-P_{step}*j}$ for a non-negative integer $j$.

8) The UE moves the candidate single-subframe resource $R_{x,y}$ with the smallest metric $E_{x,y}$ from the set $S_A$ to $S_B$. This step is repeated until the number of candidate single-subframe resources in the set $S_B$ becomes greater than or equal to $0.2 \cdot M_{total}$.

9) When the UE is configured by upper layers to transmit using resource pools on multiple carriers, it shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.

The UE shall report set $S_B$ to higher layers.

If transmission based on random selection is configured by upper layers and when the UE is configured by upper layers to transmit using resource pools on multiple carriers, the following steps are used:

1) A candidate single-subframe resource for PSSCH transmission $R_{x,y}$ is defined as a set of $L_{subCH}$ contiguous sub-channels with sub-channel $x | j$ in subframe $t^{SL}_{y}$ where $j = 0,..., L_{subCH} - 1$. The UE shall assume that any set of $L_{subCH}$ contiguous sub-channels included in the corresponding PSSCH resource pool within the time interval $[n + T_1, n + T_2]$ corresponds to one candidate single-subframe resource, where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement. The total number of the candidate single-subframe resources is denoted by $M_{total}$.

2) The set $S_A$ is initialized to the union of all the candidate single-subframe resources. The set $S_B$ is initialized to an empty set.

3) The UE moves the candidate single-subframe resource $R_{x,y}$ from the set $S_A$ to $S_B$.

4) The UE shall exclude a candidate single-subframe resource $R_{x,y}$ from SB if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.

The UE shall report set $S_B$ to higher layers.

Meanwhile, the conventional candidate resource selection method has a problem of performance (or capability) degradation, which is caused by applying only random selection for a first packet of periodic transmission.

Meanwhile, when a UE performs partial sensing, the UE needs to determine a range of partial sensing (e.g., range/number of slots being the target (or object) of partial sensing). For example, when the partial sensing range is not defined, the UE may perform monitoring during a relatively long time period (or time duration), and this may cause unnecessary power consumption of the UE. For example, when the partial sensing range is not defined, the UE may perform monitoring during a relatively short time period (or time duration). In this case, the UE may not determine resource conflict (or resource collision) with another UE, and, due to such resource conflict, reliability in SL transmission may not be ensured. In the present disclosure, partial sensing may include periodic-based partial sensing (PPS) or continuous partial sensing (CPS). In the present disclosure, PPS may also be referred to as PBPS.

According to various embodiments of the present disclosure, proposed herein are a method for selectively applying random selection and CPS based resource selection for the first packet of a periodic transmission and an apparatus supporting the same. According to various embodiments of the present disclosure, proposed herein are an SL transmission resource selection method and an apparatus supporting the same that can minimize power consumption of the UE, when the UE is operating based on partial sensing.

For example, in various embodiments of the present disclosure, when performing sensing for resource selection, based on a number of cycle periods corresponding to a specific configuration value, periodic-based partial sensing (PPS) may mean an operation performing sensing at time points corresponding to an integer multiple (k) of each cycle period. For example, the cycle periods may be cycle periods of transmission resource configured in a resource pool. For example, PPS may sense resource of a time point temporally preceding a time point of a candidate resource, which is to be a target that determines resource conflict, as much as the integer multiple k value of each cycle period. For example, the k value may be configured to have a bitmap format.

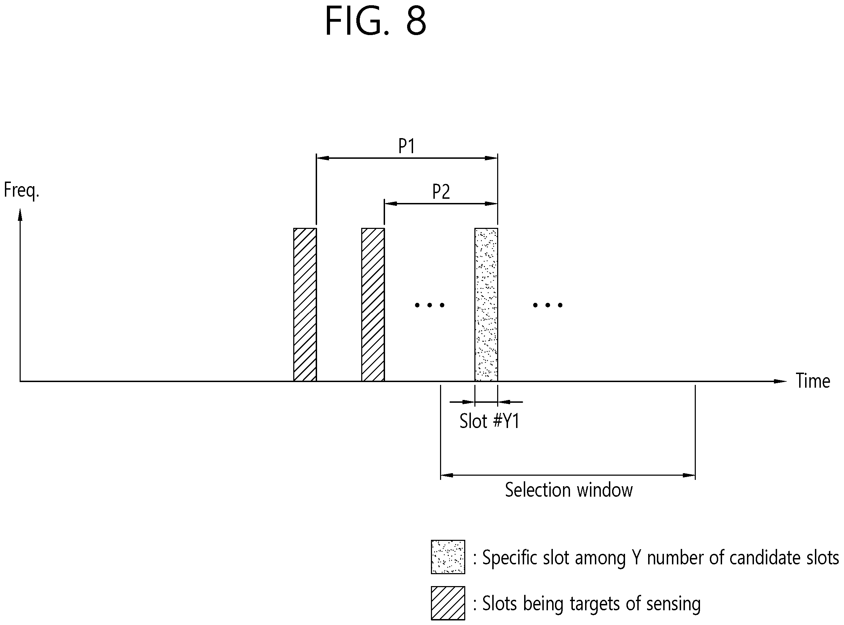

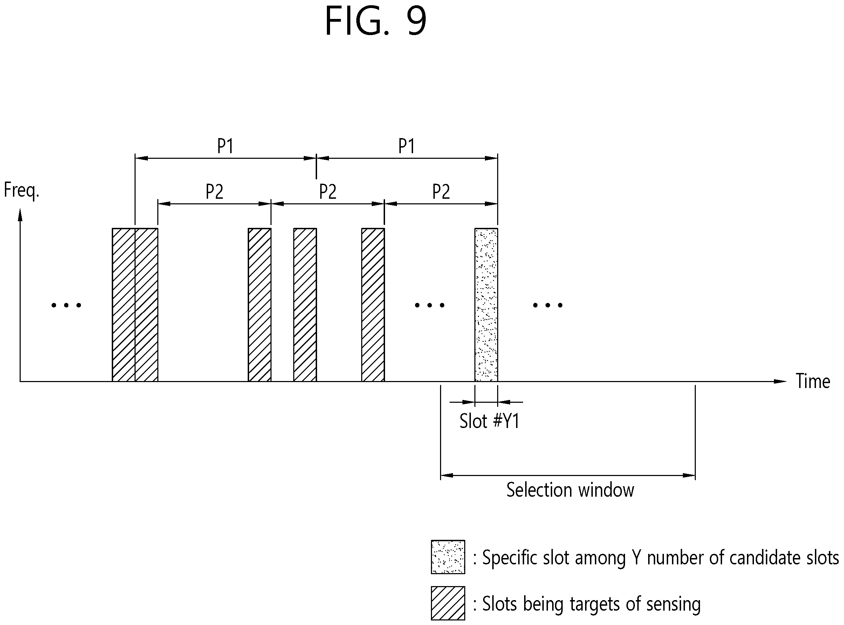

FIG. 8 and FIG. 9 respectively show a method for performing PPS, by a UE, in accordance with an embodiment of the present disclosure. FIG. 8 and FIG. 9 may be combined with various embodiments of the present disclosure.

In the embodiments of FIG. 8 and FIG. 9, it is assumed that a resource reservation cycle period that is allowed for a resource pool or a resource reservation cycle period that is configured for PPS are P1 and P2, respectively. Furthermore, it is assumed that a UE performs partial sensing (i.e., PPS) for selecting SL resource within slot #Y1.

Referring FIG. 8, a UE may perform sensing for a slot that precedes slot #Y1 (or that is located before slot #Y1) by P1 and a slot that precedes slot #Y1 by P2.

Referring FIG. 9, a UE may perform sensing for a slot that precedes slot #Y1 (or that is located before slot #Y1) by P1 and a slot that precedes slot #Y1 by P2. Furthermore, optionally, the UE may perform sensing for a slot that precedes slot #Y1 by A * P1 and a slot that precedes slot #Y1 by B * P2. For example, A and B may be positive integers that are equal to or greater than 2. More specifically, for example, a UE that has selected slot #Y1 as a candidate slot may perform sensing for slot #(Y1-resource reservation cycle period*k), and k may be a bitmap. For example, when k is equal to 10001, a UE that has selected slot #Y1 as a candidate slot may perform sensing for slot #(Y1-P1*1), slot #(Y1-P1*5), slot #(Y1-P2*1), and slot #(Y1-P2*5).

For example, in various embodiments of the present disclosure, continuous partial sensing (CPS) may mean an operation performing sensing for all or part of a time domain that is given as a specific configuration value. For example, CPS may include a short-term sensing operation that performs sensing during a relatively short time period (or time duration).

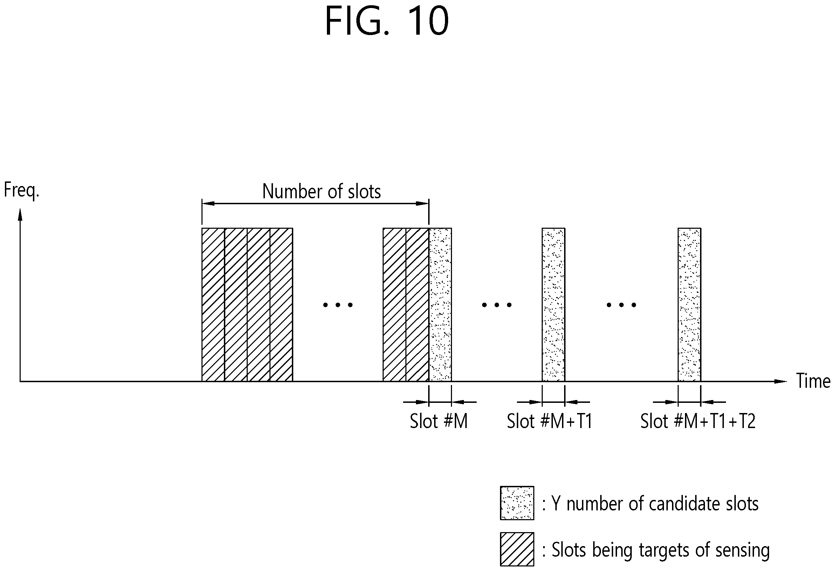

FIG. 10 shows a method for performing CPS, by a UE, in accordance with an embodiment of the present disclosure. FIG. 10 may be combined with various embodiments of the present disclosure.

In the embodiment of FIG. 10, it is assumed that Y number of candidate slots that are selected by a UE are slot #M, slot #(M+T1), and slot #(M+T1+T2). In this case, the slot(s) for which the UE should perform sensing may be determined based on a first slot (i.e., slot #M) among the Y number of candidate slots. For example, after determining the first slot among the Y number of candidate slots as a reference slot, the UE may perform sensing for N number of slots (preceding) from the reference slot.

Referring to FIG. 10, based on the first slot (i.e., slot #M) among the Y number of candidate slots, the UE may perform sensing on N number of slots. For example, the UE may perform sensing for N number of slots preceding slot #M, and the UE may select at least one SL resource from within the Y number of candidate slots (i.e., slot #M, slot #(M+T1), and slot #(M+T1+T2)), based on the sensing result. For example, N may be configured for the UE or may be pre-configured. For example, among the N number of slots, a time gap for processing may exist between the last slot and slot #M.

In an embodiment of the present disclosure, REV may mean resource re-evaluation, and PEC may mean resource pre-emption checking.

In an embodiment of the present disclosure, when a transmission resource selection is initially triggered for transmitting a random packet, a resource selection window for performing sensing (e.g., full, partial sensing) may be selected, and a "candidate resource/slot" may mean resource that is selected for detecting the occurrence or non-occurrence of resource conflict within the resource selection window, a "valid resource/slot" is a resource that has been determined to be valid (or effective) for transmission, since resource conflict has not been detected among the candidate resources based on the sensing, and, then, reported from a PHY layer to a MAC layer, and a "transmission resource/slot" may mean a resource that has been finally selected, by the MAC layer, among the reported resources, in order to be used for an SL transmission.

Hereinafter, the SL synchronization signal (Sidelink Synchronization Signal, SLSS) and synchronization information will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

Hereinafter, synchronization acquisition of a SL UE will be described.

In time division multiple access (TDMA) and frequency division multiple access (FDMA) systems, accurate time and frequency synchronization is essential. If the time and frequency synchronization is not accurate, system performance may be degraded due to inter symbol interference (ISI) and inter carrier interference (ICI). The same is true for V2X. In V2X, for time/frequency synchronization, sidelink synchronization signal (SLSS) may be used in a physical layer, and master information block-sidelink-V2X (MIB-SL-V2X) may be used in a radio link control (RLC) layer.

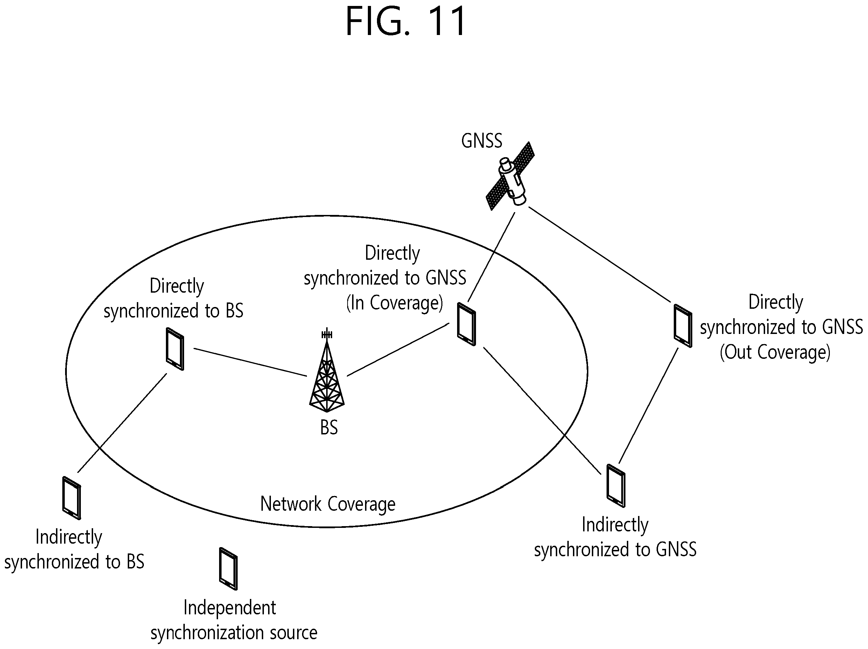

FIG. 11 shows a synchronization source or synchronization reference of V2X, based on an embodiment of the present disclosure. The embodiment of FIG. 11 may be combined with various embodiments of the present disclosure.

Referring to FIG. 11, in V2X, a UE may be directly synchronized with a global navigation satellite system (GNSS), or may be indirectly synchronized with the GNSS through a UE (inside network coverage or outside network coverage) directly synchronized with the GNSS. If the GNSS is configured as the synchronization source, the UE may calculate a DFN and a subframe number by using a coordinated universal time (UTC) and a (pre-)configured direct frame number (DFN) offset.

Alternatively, the UE may be directly synchronized with a BS, or may be synchronized with another UE which is time/frequency-synchronized with the BS. For example, the BS may be an eNB or a gNB. For example, if the UE is inside the network coverage, the UE may receive synchronization information provided by the BS, and may be directly synchronized with the BS. Thereafter, the UE may provide the synchronization information to adjacent another UE. If BS timing is configured based on synchronization, for synchronization and downlink measurement, the UE may be dependent on a cell related to a corresponding frequency (when it is inside the cell coverage at the frequency), or a primary cell or a serving cell (when it is outside the cell coverage at the frequency).

The BS (e.g., serving cell) may provide a synchronization configuration for a carrier used in V2X or SL communication. In this case, the UE may conform to the synchronization configuration received from the BS. If the UE fails to detect any cell in a carrier used in the V2X or SL communication and fails to receive the synchronization configuration from the serving cell, the UE may conform to a pre-configured synchronization configuration.

Alternatively, the UE may be synchronized with another UE which fails to obtain synchronization information directly or indirectly from the BS or the GNSS. A synchronization source or preference may be pre-configured to the UE. Alternatively, the synchronization source and preference may be configured through a control message provided by the BS.

An SL synchronization source may be associated/related with a synchronization priority. For example, a relation between the synchronization source and the synchronization priority may be defined as shown in Table 11 or Table 12. Table 11 or Table 12 are for exemplary purposes only, and the relation between the synchronization source and the synchronization priority may be defined in various forms.

[Table 11]

| Priority level | GNSS-based synchronization | eNB/gNB-based synchronization |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | All other UEs | GNSS |
| P4 | N/A | All UEs directly synchronized with GNSS |
| P5 | N/A | All UEs indirectly synchronized with GNSS |
| P6 | N/A | All other UEs |

[Table 12]

| Priority level | GNSS-based synchronization | eNB/gNB-based synchronization |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | BS | GNSS |
| P4 | All UEs directly synchronized with BS | All UEs directly synchronized with GNSS |
| P5 | All UEs indirectly synchronized with BS | All UEs indirectly synchronized with GNSS |
| P6 | Remaining UE(s) having low priority | Remaining UE(s) having low priority |

In Table 11 or Table 12, P0 may denote a highest priority, and P6 may denote a lowest priority. In Table 11 or Table 12, the BS may include at least one of a gNB and an eNB. Whether to use GNSS-based synchronization or BS-based synchronization may be (pre-)configured. In a single-carrier operation, the UE may derive transmission timing of the UE from an available synchronization reference having the highest priority.

For example, the UE may (re)select a synchronization reference, and the UE may obtain synchronization from the synchronization reference. In addition, the UE may perform SL communication (e.g., PSCCH/PSSCH transmission/-reception, physical sidelink feedback channel (PSFCH) transmission/reception, S-SSB transmission/reception, reference signal transmission/reception, etc.) based on the obtained synchronization.

Unless otherwise noted, the definitions below are applicable to the following terminologies used in the present disclosure.

- Channel: a carrier or a part of a carrier composed of a contiguous set of RBs in which a channel access procedure is performed in a shared spectrum.

- Channel access procedure (CAP): a procedure of assessing channel availability based on sensing before signal transmission in order to determine whether other communication node(s) are using a channel. A basic sensing unit is a sensing slot with a duration of $T_{sl}$ = 9 us. The base station or the UE senses a channel during a sensing slot duration. If power detected for at least 4 us within the sensing slot duration is less than an energy detection threshold $X_{thresh}$, the sensing slot duration $T_{sl}$ is considered to be idle. Otherwise, the sensing slot duration $T_{sl}$ = 9 us is considered to be busy. CAP may also be referred to as listen before talk (LBT).

- Channel occupancy: transmission(s) on channel(s) by the base station/UE after a channel access procedure.

- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).

- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.

- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.

- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB 1, the PDSCH carrying SIB1, and/or non-zero power CSI-RS.

According to an embodiment of the present disclosure, for example, an eNB operating licensed assisted access (LAA) Scell(s) in channel(s) and a gNB performing transmission(s) in channel(s) transmit(s) ) may perform a channel access procedure to access channel(s).

According to an embodiment of the present disclosure, for example, $X_{Thresh}$ for sensing may be adjusted, if applicable.

According to an embodiment of the present disclosure, for example, the gNB may perform a channel access procedure unless the provided higher layer parameter *ChannelAccessMode-r16* is 'semi-static'.

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

(1) Type 1 downlink (DL) CAP Method

In the type 1 DL CAP, the length of a time duration spanned by sensing slots sensed to be idle before transmission(s) may be random. The type 1 DL CAP may be applied to the following transmissions:

- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

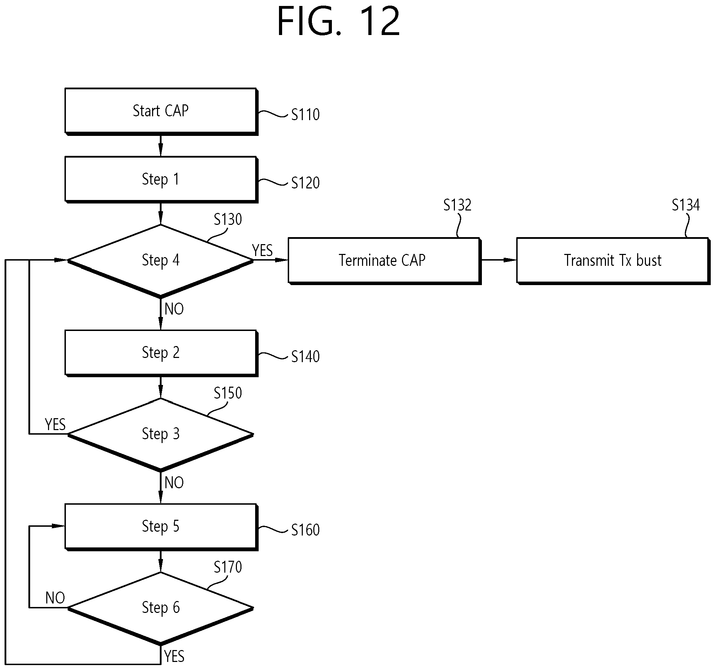

FIG. 12 shows CAP operations performed by a base station to transmit a downlink signal through an unlicensed band, based on an embodiment of the present disclosure. The embodiment of FIG. 12 may be combined with various embodiments of the present disclosure.

Referring to FIG. 12, the base station may sense whether a channel is idle for sensing slot durations of a defer duration $T_d$. Then, if a counter N is zero, the base station may perform transmission (S134). In this case, the base station may adjust the counter N by sensing the channel for additional sensing slot duration(s) according to the following steps:

Step 1) (S120) The base station sets N to $N_{init}$ (N= $N_{init}$), where $N_{init}$ is a random number uniformly distributed between 0 and $CW_p$. Then, step 4 proceeds.

Step 2) (S140) If N>0 and the base station determines to decrease the counter, the base station sets N to N-1 (N=N-1).

Step 3) (S150) The base station senses the channel for the additional sensing slot duration. If the additional sensing slot duration is idle (Y), step 4 proceeds. Otherwise (N), step 5 proceeds.

Step 4) (S130) If N=0 (Y), the base station terminates the CAP (S132). Otherwise (N), step 2 proceeds.

Step 5) (S160) The base station senses the channel until either a busy sensing slot is detected within an additional defer duration $T_d$ or all the slots of the additional defer duration Ta are detected to be idle.

Step 6) (S170) If the channel is sensed to be idle for all the slot durations of the additional defer duration $T_d$ (Y), step 4 proceeds. Otherwise (N), step 5 proceeds.

If an eNB/gNB has not transmitted a transmission after step 4 in the procedure above, the eNB/gNB may transmit a transmission on the channel, if the channel is sensed to be idle at least in a sensing slot duration $T_{sl}$ when the eNB/gNB is ready to transmit and if the channel has been sensed to be idle during all the sensing slot durations of a defer duration $T_d$ immediately before this transmission. If the channel has not been sensed to be idle in a sensing slot duration $T_{sl}$ when the eNB/gNB first senses the channel after it is ready to transmit or if the channel has been sensed to be not idle during any of the sensing slot durations of a defer duration $T_d$ immediately before this intended transmission, the eNB/gNB proceeds to step 1 after sensing the channel to be idle during the sensing slot durations of a defer duration $T_d$.

Table 13 shows that $m_p$, a minimum contention window (CW), a maximum CW, a maximum channel occupancy time (MCOT), and an allowed CW size, which are applied to the CAP, vary depending on channel access priority classes.

[Table 13]

| Channel Access Priority Class (p) | $m_p$ | $CW_{min,p}$ | $CW_{max,p}$ | $T_{mcot,p}$ | allowed $CW_p$ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 13, a contention window size (CWS), a maximum COT value, etc. for each CAPC may be defined. For example, $T_d$ may be equal to $T_f + m_p * T_{sl}$ ($T_d = T_f + m_p * T_{sl}$).

The defer duration $T_d$ is configured in the following order: duration $T_f$ (16 us) + $m_p$ consecutive sensing slot durations $T_{sl}$ (9 us). $T_f$ includes the sensing slot duration $T_{sl}$ at the beginning of the 16 us duration.

The following relationship is satisfied: $CW_{min,p} <= CW_p <= CW_{max,p}$. $CW_p$ may be configured by $CW_p = CW_{min,p}$ and updated before step 1 based on HARQ-ACK feedback (e.g., the ratio of ACK or NACK) for a previous DL burst (e.g., PDSCH) (CW size update). For example, $CW_p$ may be initialized to $CW_{min,p}$ based on the HARQ-ACK feedback for the previous DL burst. Alternatively, $CW_p$ may be increased to the next higher allowed value or maintained as it is.

For example, the eNB/gNB may not transmit on the channel for a channel occupancy time exceeding Tmcot,p, where the channel access procedure is performed according to the channel access priority class p associated with the eNB/gNB transmission (e.g., Table 13 ) can be performed.

For example, if the eNB / gNB transmits the discovery burst (s) when N>0 in the above procedure, the eNB / gNB may not decrease N during the sensing slot period (s) overlapping with the discovery burst (s) there is.

For example, a gNB may use any channel access priority class to perform the above procedure to send transmission(s) containing discovery burst(s).

For example, a gNB may use a channel access priority class applicable to unicast user plane data multiplexed to PDSCH to perform the above procedure for sending a transmission containing a unicast PDSCH together with user plane data. can

For example, for p=3/p=4, $T_{mcot,p}$ =10 ms if the absence of other technologies sharing the channel can be guaranteed in the long-term (e.g., depending on the level of regulation). , otherwise $T_{mcot,p}$ = 8 ms.

(2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions.

In the type 2A DL CAP, the base station may perform transmission immediately after the channel is sensed to be idle at least for a sensing duration $T_{short\_dl}$ = 25 us. Herein, $T_{short\_dl}$ includes the duration $T_f$ (=16 us) and one sensing slot duration immediately after the duration $T_f$, where the duration $T_f$ includes a sensing slot at the beginning thereof.

- Transmission(s) initiated by the base station including (i) a discovery burst only or (ii) a discovery burst multiplexed with non-unicast information, or

- Transmission(s) by the base station after a gap of 25 us from transmission(s) by the UE within a shared channel occupancy.

For example, according to Type 2A DL channel access procedures, an eNB/gNB may transmit a DL transmission immediately after sensing the channel to be idle for at least a sensing interval $T_{short\_dl}$ =25μs. Here, for example, $T_{short\_dl}$ may consist of a duration $T_f$ =16μs immediately followed by one sensing slot. For example, $T_f$ may include a sensing slot at start of $T_f$.

For example, Type 2B DL channel access procedures, is applicable to the transmission(s) performed by a gNB following transmission(s) by a UE after a gap of 16μs or up to 16μs, respectively, in a shared channel occupancy. For example, according to Type 2B DL channel access procedures, A gNB may transmit a DL transmission immediately after sensing the channel to be idle within a duration of T_f=16μs. For example, T_f may include a sensing slot that occurs within the last 9μs of T_f. For example, the channel may be considered to be idle within the duration T_f if the channel is sensed to be idle for a total of at least 5μs with at least 4μs of sensing occurring in the sensing slot.

For example, Type 2C DL channel access procedures, is applicable to the transmission(s) performed by a gNB following transmission(s) by a UE after a gap of 16μs or up to 16μs, respectively, in a shared channel occupancy. For example, according to Type 2C DL channel access procedures, the gNB may not sense the channel before transmission of the DL transmission. The duration of the corresponding DL transmission may be at most 584μs.

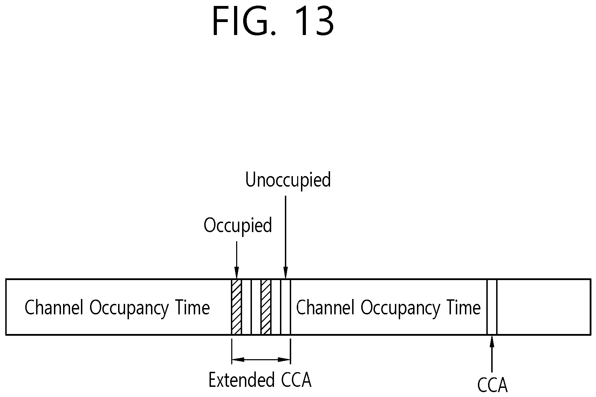

FIG. 13 is a diagram to explain a problem with a method of performing wireless communications based on a COT, according to one embodiment of the present disclosure. The embodiment of FIG. 13 may be combined with various embodiments of the present disclosure.

Referring now to FIG. 13, according to embodiment(s) of the present disclosure, for example, a communication node (e.g., base station, UE) in the unlicensed band may need to determine(evaluate) whether the channel(s) of another communication node(s) are available before transmitting a signal. For example, to determine(evaluate) whether another communication node(s) is using(occupying) the channel, the communication node(s) in the unlicensed band may perform a channel access procedure (CAP) to access the channel(s) over which the transmission(s) are to be performed. For example, the channel access procedure may be performed based on sensing. For example, a communication node may first perform carrier sensing (CS) to determine whether another communication node(s) is transmitting a signal(channel) before transmitting a signal(channel). For example, a clear channel assessment (CCA) may be defined as confirmed when it is determined that the other communication node(s) are not transmitting a signal(channel). For example, if there is a CCA threshold (e.g., $X_{Thresh}$) that is predefined or set by a higher layer (e.g., RRC), the communication node may determine that the channel state is busy if energy(power) above the CCA threshold is detected in the channel, otherwise the communication node may determine that the channel state is idle. For example, if the channel state is determined to be idle, the communication node may begin(initiate) transmitting signal(channel) in an unlicensed band. For example, CAP may be replaced by listen before talk (LBT).

Table 14 illustrates the Channel Access Procedure (CAP) supported in NR-U.

[Table 14]

| | Type | Explanation |
|---|---|---|
| DL | Type 1 CAP | CAP with random back-off<br>- time duration spanned by the sensing slots that are sensed to be idle before a downlink transmission(s) is random |
| | Type 2 CAP | CAP without random back-off |
| | - Type 2A, 2B, 2C | - time duration spanned by sensing slots that are sensed to be idle before a downlink transmission(s) is deterministic |
| UL or SL | Type 1 CAP | CAP with random back-off<br>- time duration spanned by the sensing slots that are sensed to be idle before an uplink or sidelink transmission(s) is random |
| | Type 2 CAP - Type 2A, 2B, 2C | CAP without random back-off<br>- time duration spanned by sensing slots that are sensed to be idle before an uplink or sidelink transmission(s) is deterministic |

Referring to Table 14, an LBT type or CAP for DL/UL/SL transmission may be defined. However, Table 14 is only an example, and a new type or CAP may be defined in a similar manner. For example, Type 1 (also referred to as Cat-4 LBT) may be a random back-off based channel access procedure. For example, in the case of Cat-4, the contention window may change. For example, type 2 can be performed in case of COT sharing within COT acquired by gNB or UE.

For example, when the COT obtained by the UE is shared with another UE (eg, when the other UE obtains information on the COT shared from the UE), the other UE transmits within the COT after a Type 2 CAP Transmission (e.g., transmission to the UE or other device) may be performed using resources. However, for example, the other UE cannot distinguish whether the COT (e.g., transmission resource within the COT) is for itself or not with only the information about the shared COT. Thus, for example, transmission resources within the shared COT may be used indiscriminately or may not be used by anyone.

According to one embodiment of the present disclosure, for example, the SL mode-2 resource allocation may include a resource allocation in which the UE selects a transmission resource based on sensing for ITS dedicated bands or licensed bands, whereas in unlicensed bands, the transmission resource selection may not be guaranteed.

According to one embodiment of the present disclosure, a method for efficiently selecting transmission resources by a UE in an unlicensed band and an apparatus for supporting the same may be proposed.

According to one embodiment of the present disclosure, for example, in an unlicensed band, a base station or UE may basically generate a channel occupancy time (COT) based on a listen before talk (LBT) behavior and perform communications based on the resources within the obtained COT.

According to one embodiment of the present disclosure, for example, when a UE performs SL mode-2 operation, the base station may perform LBT operation to acquire(obtain) a COT above a threshold time interval, and the base station may direct/share the acquired COT to the UE as part of a SL resource pool from which the SL UE may perform resource selection. For example, the SL resource pool may be set(configured) (in advance) in the form of a bitmap or the like for the base station-acquired COT durations. According to one embodiment, a UE performing SL communication in an unlicensed band may perform SL communication based on the transmission channel access competition between base stations or UEs, and/or based on COTs generated(initiated) via LBT or shared by base stations or UEs without setting(configuring) a specific SL resource pool.

According to one embodiment of the present disclosure, for example, a UE performing SL communications in an unlicensed band may, based on one or more COTs generated through the LBT, perform HARQ feedback transmissions for a TB transmission performed over a temporally preceding (e.g., prior, followed in time) COT and a HARQ feedback transmission for the reception of the TB over a temporally lagging (e.g., subsequent, following in time) COT.

According to one embodiment of the present disclosure, for example, a UE performing SL communications in an unlicensed band may select resources within a COT generated(initiated) via LBT that are adjacent to each other, or that is included within a time interval below a certain threshold, or that are separated by a time/frequency distance below a certain threshold, to transmit TBs. For example, the UE may perform only blind transmissions for TB transmissions within a COT, and transmit HARQ feedback for the blind transmissions within the COT via a temporally lagging COT or the temporally earliest COT after the COT.

According to one embodiment of the present disclosure, for example, a HARQ feedback-based transmission may be performed within the COT for TB transmissions within a COT and for TB transmissions for which HARQ feedback for the TB transmissions can be received, and a blind transmission may be performed for TB transmissions for which HARQ feedback is not received outside the COT.

According to one embodiment of the present disclosure, for example, when a TX UE transmits a TB to an RX UE, the RX UE may transmit HARQ feedback to the TX UE within a COT generated by the TX UE via LBT. For example, even if the TX UE does not share the COT with the RX UE (e.g., even if the TX UE does not transmit signaling(channel) associated with COT sharing to the RX UE), it may be expected that the TX UE has sufficient COT bandwidth to allow the RX UE to transmit the HARQ feedback within the COT generated by the TX UE (e.g., after a HARQ RTT(round-trip time) gap).

According to one embodiment of the present disclosure, for example, when SL communication is performed in an unlicensed band, the UE may repeatedly (e.g., blindly) transmit the same TB through one slot or one symbol within the COT generated via LBT. For example, instead of the above repeated transmission, the UE may transmit a codeword generated at a lower code rate (e.g., a mother code generated for HARQ transmission) for the TB transmission through one slot or one symbol in the COT generated through the LBT to obtain coding gain.

According to one embodiment of the present disclosure, for example, when a UE generates a COT based on LBT for SL communication in an unlicensed band, the UE may only share the COT with at least one of a peer UE performing a SL unicast, a group member UE performing a SL groupcast, or neighboring UEs present within a certain threshold distance (e.g., communication range requirement)/zone (e.g., zone ID) from the UE.

According to one embodiment of the present disclosure, for example, when a UE generates(initiates) a COT based on an LBT for SL communications in an unlicensed band, the UE may share the COT only with UEs that are using the same synchronization reference as that selected by the UE, or that have selected a synchronization reference with the same synchronization priority based on the synchronization reference selected by the UE, or that have a sync timing offset within a certain threshold from the sync timing used by the UE.

According to one embodiment of the present disclosure, for example, if a UE has generated(initated) a COT based on an LBT for SL communication in an unlicensed band, the UE may share the COT information with other UEs via an inter-UE coordination message.

According to one embodiment of the present disclosure, for example, where a UE has generated(initiated) a COT based on an LBT for SL communications in an unlicensed band and the UE has shared the COT with another UE, the UE or the other UE may select (whether to use) transmission resources within the COT based on a rule base associated with a predefined or (pre)established resource allocation. For example, (whether to use) the transmission resource within the COT may be determined based on a source or destination ID associated with a TB transmitted by the UE. For example, (whether to use) the transmission resource within the COT may be determined based on an ID associated with the UE, or a group member ID of a group to which the UE belongs, or the like.

According to one embodiment of the present disclosure, for example, where a UE has generated(initiated) a COT based on an LBT for SL communications in an unlicensed band, the UE may, for a duration within a certain threshold from the start of the COT, determine a transmission resource based on a rule associated with a predefined or (pre)established resource allocation (e.g., based on a source or destination ID associated with a TB transmitted by the UE, based on an ID associated with the UE, based on a group member ID of a group to which the UE belongs, etc.), and for a duration after a certain threshold from the start of the COT, the UE may select a transmission resource based on a sensing of the duration before the certain threshold.

According to various embodiments of the present disclosure, when SL communications are performed in an unlicensed band, a method for a UE to transmit a TB based on HARQ feedback and receive HARQ feedback for a COT generated(initiated) based on LBT, and a method for efficiently selecting resources by one or more UEs within the shared COT may be presented.

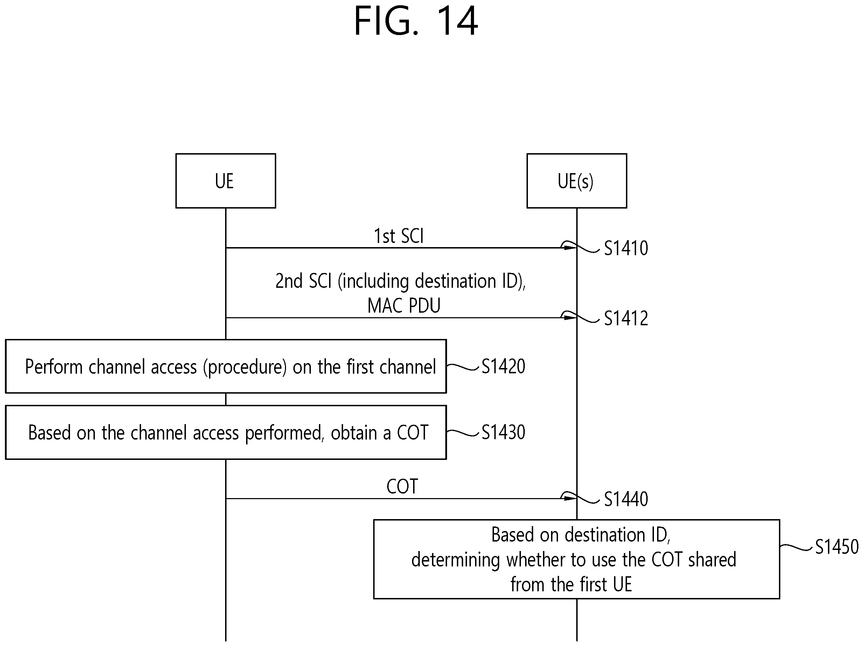

FIG. 14 is a diagram to explain a method of performing wireless communication based on a COT, according to one embodiment of the present disclosure. The embodiment of FIG. 14 may be combined with various embodiments of the present disclosure.

Referring to FIG. 14, in one embodiment of the present disclosure, for example, the first communication node (e.g., first device, first base station, first UE(s)) may transmit, through PSSCH, a first SCI to the second communication node(s) for scheduling the PSSCH and the second SCI. For example, the first communication node may transmit, through PSSCH, a second SCI and/or a medium access control protocol data unit (MAC PDU) to the second communication node(s). The second SCI may include a source ID and/or a destination ID.

For example, the first communication node(s) may perform a channel access on the first channel. For example, the channel access procedure may be performed based on sensing.

For example, the first communication node may obtain (e.g., initiate) a channel occupancy time (COT)/channel occupancy (CO) (hereinafter collectively referred to as COT) (e.g., based on the channel access performed). For example, the COT may be shared.

For example, the first communication node may transmit (e.g., configure) information related to the COT (e.g., information related to the sharing of the COT, information related to the COT shared from the communication node, information to indicate the shared COT, etc.) to the second communication node.

For example, the second communication node(s) may determine, based on an identity (e.g., entity ID (e.g., station ID, vehicle ID, pedestrian ID, RSU ID), application layer ID, source ID, destination ID), whether to use the shared COT from the first communication node. For example, the second communication node(s) may determine whether to use the shared COT from the first communication node based on a destination ID included in the second SCI matching a destination ID associated with the first communication node. For example, the second communication node(s) may determine whether to use the shared COT from the first communication node based on a destination ID/source ID included in the second SCI matching a source ID/destination ID associated with the first communication node.

For example, the second communication node(s) may perform a transmission (e.g., a transmission to the first communication node, a transmission to a third device, a transmission to another second communication node(s)) based on the shared COT.

For example, A responding UE over a shared COT may include at least one of the followings.

- a receiving UE, which is the target of a PSCCH/PSSCH transmission of a COT initiator.

- In the case of unicast from the COT initiator, within the same COT when the source and destination IDs contained in the COT initiator's SCI match to the corresponding destination and source IDs relating to the same unicast at the receiving UE.

- In the case of groupcast and broadcast, when the destination ID contained in the COT initiator's SCI match to a destination ID known at the receiving UE.

- a UE identified by ID(s), if additional IDs are supported in the COT sharing information (in addition to the source and destination IDs of the PSCCH/PSSCH transmission), when additional IDs are included in the COT sharing information from the COT initiator.

Embodiment(s) of the present disclosure may have a variety of effects. For example, according to one embodiment of the present disclosure, a receiving UE may be able to distinguish whether a COT (e.g., transmission resources within a COT) shared from a COT-initiator is intended for the receiving UE itself or not. For example, according to one embodiment of the present disclosure, transmission resources within the shared COT may not be wasted. For example, according to one embodiment of the present disclosure, transmission resources within the shared COT may be utilized for the purposes of the COT-initiator.

According to one embodiment of the present disclosure, for example, in unlicensed bands, a base station or UE may basically generate(initiate) a COT based on listen before talk (LBT) behavior, and may perform communications based on resources within the obtained COT. For example, in Uu-based unlicensed communications, a base station may generate a COT, the base station may share the generated COT with a UE, and the UE may perform communications over scheduled resources in the shared COT, or a UE may generate a COT and the UE may share the generated COT with the base station, and the base station may transmit data to the UE over resources in the COT. One embodiment(s) of the present disclosure may suggest how a UE selects a transmission resource when performing SL communications in an unlicensed band.

According to one embodiment of the present disclosure, for example, in SL mode-1 operation, a base station may generate periodic fixed frame periods (FFPs) and may schedule resources within the FFPs to SL UEs. The base station may generate the FFPs only when there is no other transmission, with a threshold time gap between consecutive FFPs, and by performing LBT for a threshold time.

According to one embodiment of the present disclosure, for example, the base station may allocate a Configured Grant (CG) resource to the UE within the FFP. For example, the base station may allocate a CG type-1 resource to the UE via an RRC, wherein the RRC may include an offset value and a period value for the CG type-1 resource, wherein, for example, the offset value may be a reference point associated with a start time of the FFP. For example, the reference point may be the FFP closest to the DL SFN=0 time point, or the FFP at which the RRC is sent, or each periodically generated FFP.

For example, if the CG type-1 resource is allocated over one or more FFPs, after the UE receives an RRC indicating the CG type-1, the UE may transmit using a periodic CG type-1 resource based on the offset value and the period value, if the base station failed to generate the FFP because another transmission was detected after performing the LBT prior to the generation of the particular FFP, the base station may, after performing the LBT to generate the FFP, signal to the UE via RRC or DCI (e.g., using the COT obtained through the new LBT) that the FFP generation has failed, or may deactivate the CG type-1 resource belonging to the FFP that failed to be generated, thereby preventing the UE from transmitting over the invalid CG type-1 resource.

According to one embodiment of the present disclosure, for example, the base station may allocate a Configured Grant (CG) resource to a UE within the FFP. For example, the base station may allocate a CG type-2 resource to the UE via an RRC and a DCI, wherein the RRC may include an offset value and a period value for the CG type-2 resource, and the DCI may include a time/frequency location for the CG type-2 resource. In one example, the offset value may be a reference point associated with a start time of the FFP at which the DCI is transmitted.

According to one embodiment of the present disclosure, for example, if the CG type-2 resource is allocated over one or more FFPs, after the UE receives the DCI activating the CG type-2 resource, the UE may transmit using the CG type-2 resource periodically based on the offset value and the period value, if the base station has failed to generate an FFP due to detection of another transmission after performing LBT prior to generating a particular FFP, the base station may, after performing the LBT to generate the FFP, signal to the UE via DCI (e.g., using the COT obtained through the new LBT) that the FFP generation has failed, or may deactivate the CG type-2 resource belonging to the FFP that failed to be generated, thereby preventing the UE from transmitting over the invalid CG type-2 resource.

According to one embodiment of the present disclosure, for example, if the base station fails to generate an FFP for the CG type-1 or CG type-2 resource, the UE may convert(switch) to an SL mode-2 transmission, rather than an FFP-based transmission for the mode-1 transmission, and perform the LBT (e.g., LBT type1, type2A or type 2B or type 2C) required for the SL mode-2 transmission, and perform a TB transmission based on it.

According to one embodiment of the present disclosure, for example, in SL mode-1 operation, the base station may create a COT based on the LBT and schedule resources within the COT to the SL UE. For example, in order to allocate CG resources to the UE for periodic transmissions, the base station may generate a COT based on the LBT to include the timing of the periodic transmissions.

According to one embodiment of the present disclosure, for example, the base station may allocate a Configured Grant (CG) resource to a UE within the COT. The base station may allocate a CG type-1 resource to the UE via an RRC, wherein the RRC may include an offset value and a period value for the CG type-1 resource, wherein the offset value may be a reference point associated with a start time of the COT. For example, the reference point may be the COT closest to the DL SFN=0 point, or the COT at which the RRC is transmitted, or each COT generated based on the LBT.

According to one embodiment of the present disclosure, for example, if the CG type-1 resource is allocated across(over) one or more COTs, the UE, after receiving an RRC indicating the CG type-1, transmits using the CG type-1 resource at periodic intervals based on the offset value and the period value, if the base station fails to generate a COT covering(including) the timing(duration) of the periodic transmission because another transmission is detected after performing the LBT, the base station may, after performing the LBT to generate the COT, signal to the UE via RRC or DCI (using the COT obtained through the new LBT) that the COT generation has failed, and/or deactivate the CG type-1 resource belonging to(included in) the failed COT to prevent the UE from transmitting over the invalid CG type-1 resource.

According to one embodiment of the present disclosure, for example, the base station may allocate a Configured Grant (CG) resource to a UE within the COT. In this case, the base station may allocate a CG type-2 resource to the UE via an RRC and a DCI, wherein the RRC may include an offset value and a period value for the CG type-2 resource, and the DCI may include a time/frequency location(position) for the CG type-2 resource. In one example, the offset value may be a reference time associated with a start time of the COT in which the DCI is transmitted.

According to one embodiment of the present disclosure, for example, when the CG type-2 resource is allocated over one or more COTs, the UE, after receiving the DCI activating the CG type-2 resource, transmits using the CG type-2 resource at periodic intervals based on the offset value and the period value, and then if the base station has failed to generate a COT covering(including) the time of the periodic transmission due to the detection of another transmission after performing the LBT, the base station may, after performing the LBT to generate the COT, signal the UE via DCI (using the COT obtained through the new LBT) that the COT generation has failed, and/or deactivate the CG type-2 resource belonging to(included in) the failed COT to prevent the UE from transmitting over the invalid CG type-2 resource.

According to one embodiment of the present disclosure, for example, if the base station fails to generate a COT for the CG type-1 or CG type-2 resource, the UE may convert to an SL mode-2 transmission, rather than a COT-based transmission for the mode-1 transmission, and perform the LBT (e.g., LBT type1, type2A or type 2B or type 2C) required for the SL mode-2 transmission, and perform a TB transmission based on it.

According to one embodiment of the present disclosure, for example, if the base station allocates a CG resource to the UE based on an FFP, or if the base station allocates a CG resource to the UE based on a COT, the UE may be notified(receive notification) by the base station that the generation of the FFP or COT has failed, or if the UE has not received an RRC or DCI deactivating the corresponding CG resource within a threshold range as of a certain time, the UE may no longer wait for reception of the RRC or DCI, and the UE may convert to SL mode-2 transmission and perform the LBT (e.g., LBT type1, type2A or type 2B or type 2C) required for SL mode-2 transmission, and may perform TB transmission based thereon. For example, the certain time may be associated with an expected start of a FFP or COT, or may be associated with a periodic transmission resource time.

According to one embodiment of the present disclosure, if, for example, the UE has requested a DG resource allocation from the base station via a buffer state report (BSR) or HARQ feedback, and the base station has failed to allocate the DG resource to the UE based on LBT for a threshold time, the UE may switch to SL mode-2 transmission and perform the LBT (e.g., LBT type1, type2A or type 2B or type 2C) required for SL mode-2 transmission, and may perform a TB transmission based thereon.

According to various embodiments of the present disclosure, in order for a base station in an unlicensed band to allocate SL mode-1 resources to a UE, the base station may allocate resources based on FFP or COT, or if resource allocation from the base station fails, the UE may switch to SL mode-2 to obtain transmission resources based on LBT.

For example, a parameter value that is related to the application or non-application of the aforementioned rule and/or that is related to the proposed method/rule of the present disclosure may be configured/allowed specifically to (or differently or independently from) a service type. For example, a parameter value that is related to the application or non-application of the aforementioned rule and/or that is related to the proposed method/rule of the present disclosure may be configured/allowed specifically to (or differently or independently from) (LCH or service) priority. For example, a parameter value that is related to the application or non-application of the aforementioned rule and/or that is related to the proposed method/rule of the present disclosure may be configured/allowed specifically to (or differently or independently from) QoS requirements (e.g., latency, reliability, minimum communication range). For example, a parameter value that is related to the application or non-application of the aforementioned rule and/or that is related to the proposed method/rule of the present disclosure may be configured/allowed specifically to (or differently or independently from) PQI parameters. For example, a parameter value that is related to the application or non-application of the aforementioned rule and/or that is related to the proposed method/rule of the present disclosure may be configured/allowed specifically to (or differently or independently from) HARQ feedback ENABLED LCH/MAC PDU (transmission). For example, a parameter value that is related to the application or non-application of the aforementioned rule and/or that is related to the proposed method/rule of the present disclosure may be configured/allowed specifically to (or differently or independently from) HARQ feedback DISABLED LCH/MAC PDU (transmission). For example, a parameter value that is related to the application or non-application of the aforementioned rule and/or that is related to the proposed method/rule of the present disclosure may be configured/allowed specifically to (or differently or independently from) a CBR measurement value of a resource pool. For example, a parameter value that is related to the application or non-application of the aforementioned rule and/or that is related to the proposed method/rule of the present disclosure may be configured/allowed specifically to (or differently or independently from) an SL cast type (e.g., unicast, groupcast, broadcast). For example, a parameter value that is related to the application or non-application of the aforementioned rule and/or that is related to the proposed method/rule of the present disclosure may be configured/allowed specifically to (or differently or independently from) an SL groupcast HARQ feedback option (e.g., NACK only feedback, ACK/NACK feedback, TX-RX range-based NACK only feedback). For example, a parameter value that is related to the application or non-application of the aforementioned rule and/or that is related to the proposed method/rule of the present disclosure may be configured/allowed specifically to (or differently or independently from) SL mode 1 CG type (e.g., SL CG type 1 or SL CG type 2). For example, a parameter value that is related to the application or non-application of the aforementioned rule and/or that is related to the proposed method/rule of the present disclosure may be configured/allowed specifically to (or differently or independently from) SL mode type (e.g., mode 1 or mode 2). For example, a parameter value that is related to the application or non-application of the aforementioned rule and/or that is related to the proposed method/rule of the present disclosure may be configured/allowed specifically to (or differently or independently from) a resource pool. For example, a parameter value that is related to the application or non-application of the aforementioned rule and/or that is related to the proposed method/rule of the present disclosure may be configured/allowed specifically to (or differently or independently from) whether or not the resource pool is configured of PSFCH resource. For example, a parameter value that is related to the application or non-application of the aforementioned rule and/or that is related to the proposed method/rule of the present disclosure may be configured/allowed specifically to (or differently or independently from) a source (L2) ID. For example, a parameter value that is related to the application or non-application of the aforementioned rule and/or that is related to the proposed method/rule of the present disclosure may be configured/allowed specifically to (or differently or independently from) a destination (L2) ID. For example, a parameter value that is related to the application or non-application of the aforementioned rule and/or that is related to the proposed method/rule of the present disclosure may be configured/allowed specifically to (or differently or independently from) a PC5 RRC connection link. For example, a parameter value that is related to the application or non-application of the aforementioned rule and/or that is related to the proposed method/rule of the present disclosure may be configured/allowed specifically to (or differently or independently from) an SL link. For example, a parameter value that is related to the application or non-application of the aforementioned rule and/or that is related to the proposed method/rule of the present disclosure may be configured/allowed specifically to (or differently or independently from) a connection status (with a base station) (e.g., RRC CONNECTED state, IDLE state, INACTIVE state). For example, a parameter value that is related to the application or non-application of the aforementioned rule and/or that is related to the proposed method/rule of the present disclosure may be configured/allowed specifically to (or differently or independently from) an SL HARQ process (ID). For example, a parameter value that is related to the application or non-application of the aforementioned rule and/or that is related to the proposed method/rule of the present disclosure may be configured/allowed specifically to (or differently or independently from) a performance or non-performance of an SL DRX operation (of the TX UE or RX UE). For example, a parameter value that is related to the application or non-application of the aforementioned rule and/or that is related to the proposed method/rule of the present disclosure may be configured/allowed specifically to (or differently or independently from) whether or not the (TX or RX) UE is a power saving UE. For example, a parameter value that is related to the application or non-application of the aforementioned rule and/or that is related to the proposed method/rule of the present disclosure may be configured/allowed specifically to (or differently or independently from) a case where PSFCH TX and PSFCH RX (and/or a plurality of PSFCH TXs (exceeding the UE capability)) overlap (in the viewpoint of a specific UE). For example, a parameter value that is related to the application or non-application of the aforementioned rule and/or that is related to the proposed method/rule of the present disclosure may be configured/allowed specifically to (or differently or independently from) a case where an RX UE has actually received PSCCH (and/or PSSCH) (re-)transmission (successfully) from a TX UE.

For example, in the present disclosure, the wording for configuration (or designation) may be extendedly interpreted as a form of informing (or notifying), by a base station, to a UE through a pre-defined (physical layer or higher layer) channel/ signal (e.g., SIB, RRC, MAC CE) (and/or a form being provided through a pre-configuration and/or a form of informing (or notifying), by the UE, to another UE through a pre-defined (physical layer or higher layer) channel/ signal (e.g., SL MAC CE, PC5 RRC)).

For example, in the present disclosure, the wording for PSFCH may be extendedly interpreted as (NR or LTE) PSSCH (and/or (NR or LTE) PSCCH) (and/or (NR or LTE) SL SSB (and/or UL channel/signal)). Additionally, the proposed method of the present disclosure may be extendedly used by being inter-combined (to a new type of method).

For example, in the present disclosure, a specific threshold value may be pre-defined or may mean a threshold value that is (pre-)configured by a network or base station or a higher layer (including an application layer) of a UE. For example, in the present disclosure, a specific configuration value may be pre-defined or may mean a value that is (pre-)configured by a network or base station or a higher layer (including an application layer) of a UE. For example, an operation that is configured by the network/base station may mean an operation that is (pre-)configured by the base station to the UE via higher layer signaling, or that is configured/signaled by the base station to the UE through a MAC CE, or that is signaled by the base station to the UE through DCI.

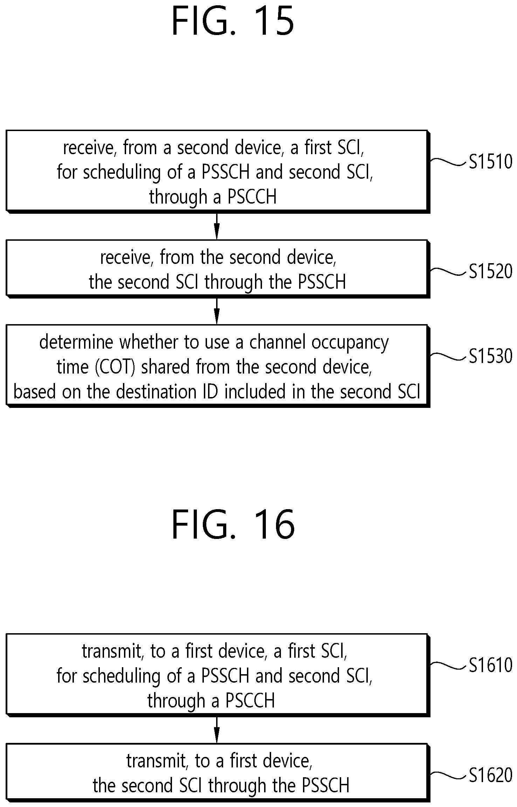

FIG. 15 shows a method for performing wireless communication by a first device, based on an embodiment of the present disclosure. The embodiment of FIG. 15 may be combined with various embodiments of the present disclosure.

Referring to FIG. 15, in step S1510, for example, the first device may receive, from a second device, a first SCI, for scheduling of a physical sidelink shared channel (PSSCH) and second sidelink control information (SCI), through a physical sidelink control channel (PSCCH). In step S1520, for example, the first device may receive, from the second device, the second SCI through the PSSCH. In step S1530, for example, the second SCI includes a destination ID. In step S 1530, for example, the first device may determine whether to use a channel occupancy time (COT) shared from the second device, based on the destination ID included in the second SCI.

Additionally or alternatively, the second SCI may further comprise a source ID; and

Additionally or alternatively, based on the source ID and the destination ID included in the second SCI, whether to use the COT from the second device may be determined.

Additionally or alternatively, the destination ID may comprise a destination ID related with the first device.

Additionally or alternatively, the second SCI and MAC (medium access control) protocol data unit (PDU) may be received from the second device, through the PSSCH, and

Additionally or alternatively, the destination ID may include a destination ID related with the MAC PDU.

Additionally or alternatively, the second SCI may further include information related to a zone ID.

Additionally or alternatively, wherein based on the first device being within a first zone related with the zone ID, whether to use the COT from the second device may be determined.

Additionally or alternatively, the second SCI may further comprise information related to a communication range requirement.

Additionally or alternatively, based on the first device being within a distance of the communication range requirement from a location of the second device, whether to use the COT from the second device may be determined.

Additionally or alternatively, the COT may be included within a sidelink (SL) resource pool.

Additionally or alternatively, the first device may perform a transmission within the COT, based on the determination that the COT is used.

Additionally or alternatively, based on reception of hybrid automatic repeat request (HARQ) feedback for the transmission within the COT being expected, HARQ- feedback-enabled transmission may be performed.

Additionally or alternatively, based on reception of hybrid automatic repeat request (HARQ) feedback for the transmission within the COT not being expected, a blind transmission may be performed.

Additionally or alternatively, the first device may select a synchronization reference.

Additionally or alternatively, based on the synchronization reference, whether to use the COT from the second device may be determined.

The proposed method may be applied to an apparatus according to various embodiments of the present disclosure. First, one or more memories 104 of the first device 100, based on being executed by the one or more processors 102, may store instructions to cause the first device(e.g., one or more processors 102, one or more transceiver 106) to perform operations. For example, the operations may include: receiving, from a second device, a radio resource control (RRC) message including information related to whether capability regarding inter-UE coordination (IUC) is supported. For example, the operations may include at least one of: receiving, from a second device, a first SCI, for scheduling of a physical sidelink shared channel (PSSCH) and second sidelink control information (SCI), through a physical sidelink control channel (PSCCH); receiving, from the second device, the second SCI through the PSSCH, wherein the second SCI includes a destination ID; and/or determining whether to use a channel occupancy time (COT) shared from the second device, based on the destination ID included in the second SCI.

According to an embodiment of the present disclosure, a method for performing wireless communication by a first device may be proposed. For example, the first device may receive, from a second device, a first SCI, for scheduling of a physical sidelink shared channel (PSSCH) and second sidelink control information (SCI), through a physical sidelink control channel (PSCCH). For example, the first device may receive, from the second device, the second SCI through the PSSCH. For example, the second SCI includes a destination ID. For example, the first device may determine whether to use a channel occupancy time (COT) shared from the second device, based on the destination ID included in the second SCI.

According to an embodiment of the present disclosure, a first device adapted to perform wireless communication may be proposed. For example, the first device may include one or more processors; one or more transceivers; and one or more memories connected to the one or more processors and storing instructions that, based on being executed, cause the one or more processors to perform operations. For example, the operations include at least one of: receiving, from a second device, a first SCI, for scheduling of a physical sidelink shared channel (PSSCH) and second sidelink control information (SCI), through a physical sidelink control channel (PSCCH); receiving, from the second device, the second SCI through the PSSCH, wherein the second SCI includes a destination ID; and/or determining whether to use a channel occupancy time (COT) shared from the second device, based on the destination ID included in the second SCI.

According to an embodiment of the present disclosure, a processing device adapted to control a first device may be proposed. For example, the processing device may comprise: one or more processors; and one or more memories operably connectable to the one or more processors and storing instructions that, based on being executed, cause the one or more processors to perform operations. For example, the operations may comprise at least one of : receiving, from a second device, a first SCI, for scheduling of a physical sidelink shared channel (PSSCH) and second sidelink control information (SCI), through a physical sidelink control channel (PSCCH); receiving, from the second device, the second SCI through the PSSCH, wherein the second SCI includes a destination ID; and/or determining whether to use a channel occupancy time (COT) shared from the second device, based on the destination ID included in the second SCI.

According to an embodiment of the present disclosure, at least one non-transitory computer-readable storage medium storing instructions may be proposed. For example, the instructions that, based on being executed by at least one processor, cause a first device to perform operations. For example, the operations may include at least one of : receiving, from a second device, a first SCI, for scheduling of a physical sidelink shared channel (PSSCH) and second sidelink control information (SCI), through a physical sidelink control channel (PSCCH); receiving, from the second device, the second SCI through the PSSCH, wherein the second SCI includes a destination ID; and/or determining whether to use a channel occupancy time (COT) shared from the second device, based on the destination ID included in the second SCI.

FIG. 16 shows a method for performing wireless communication by a second device, based on an embodiment of the present disclosure. The embodiment of FIG. 16 may be combined with various embodiments of the present disclosure.

Referring to FIG. 16, in step S1610, for example, the second device may transmit, to a first device, a first SCI, for scheduling of a physical sidelink shared channel (PSSCH) and second sidelink control information (SCI), through a physical sidelink control channel (PSCCH). In step S1620, for example, the second device may transmit, to the first device, the second SCI through the PSSCH. For example, the second SCI may include a destination ID. For example, whether to use a channel occupancy time (COT) shared from the second device may be determined, based on the destination ID included in the second SCI.

Additionally or alternatively, the second SCI may further comprise a source ID; and

Additionally or alternatively, based on the source ID and the destination ID included in the second SCI, whether to use the COT from the second device may be determined.

Additionally or alternatively, the destination ID may comprise a destination ID related with the first device.

Additionally or alternatively, the second SCI and MAC (medium access control) protocol data unit (PDU) may be received from the second device, through the PSSCH, and

Additionally or alternatively, the destination ID may include a destination ID related with the MAC PDU.

Additionally or alternatively, the second SCI may further include information related to a zone ID.

Additionally or alternatively, wherein based on the first device being within a first zone related with the zone ID, whether to use the COT from the second device may be determined.

Additionally or alternatively, the second SCI may further comprise information related to a communication range requirement.

Additionally or alternatively, based on the first device being within a distance of the communication range requirement from a location of the second device, whether to use the COT from the second device may be determined.

Additionally or alternatively, the COT may be included within a sidelink (SL) resource pool.

Additionally or alternatively, the first device may perform a reception within the COT, based on the determination that the COT is used.

Additionally or alternatively, based on reception of hybrid automatic repeat request (HARQ) feedback for the transmission within the COT being expected, HARQ- feedback-enabled transmission may be performed.

Additionally or alternatively, based on reception of hybrid automatic repeat request (HARQ) feedback for the transmission within the COT not being expected, a blind transmission may be performed.

Additionally or alternatively, the second device may select a synchronization reference.

Additionally or alternatively, based on the synchronization reference, whether to use the COT from the second device may be determined.

The proposed method may be applied to a device according to various embodiments of the present disclosure. First, one or more memories 204 of the second device 200, based on being executed by the one or more processors 202, may store instructions to cause the second device(e.g., one or more processors 202, one or more transceiver 206) to perform operations.. For example, the operations may include: transmitting, to a first device, a first SCI, for scheduling of a physical sidelink shared channel (PSSCH) and second sidelink control information (SCI), through a physical sidelink control channel (PSCCH); and/or transmitting, to the first device, the second SCI through the PSSCH. For example, the second SCI may include a destination ID. For example, whether to use a channel occupancy time (COT) shared from the second device may be determined, based on the destination ID included in the second SCI.

According to an embodiment of the present disclosure, a method for performing wireless communication by a second device may be proposed. For example, the second device may transmit, to a first device, a first SCI, for scheduling of a physical sidelink shared channel (PSSCH) and second sidelink control information (SCI), through a physical sidelink control channel (PSCCH). For example, the second device may transmit, to the first device, the second SCI through the PSSCH. For example, the second SCI may include a destination ID. For example, whether to use a channel occupancy time (COT) shared from the second device may be determined, based on the destination ID included in the second SCI.

According to an embodiment of the present disclosure, A second device adapted to perform wireless communication may be proposed. For example, the second device may comprise: one or more processors; one or more transceivers; and one or more memories connected to the one or more processors and storing instructions that, based on being executed, cause the one or more processors to perform operations. For example, the operations may include at least one of:

transmitting, to a first device, a first SCI, for scheduling of a physical sidelink shared channel (PSSCH) and second sidelink control information (SCI), through a physical sidelink control channel (PSCCH); and/or transmitting, to the first device, the second SCI through the PSSCH. For example, the second SCI may include a destination ID. For example, whether to use a channel occupancy time (COT) shared from the second device may be determined, based on the destination ID included in the second SCI.

According to an embodiment of the present disclosure, a processing device adapted to control a second device may be proposed. For example, the processing device may comprise: one or more processors; and one or more memories connected to the one or more processors and storing instructions that, based on being executed, cause the one or more processors to perform operations. For example, the operations may include at least one of: transmitting, to a first device, a first SCI, for scheduling of a physical sidelink shared channel (PSSCH) and second sidelink control information (SCI), through a physical sidelink control channel (PSCCH); and/or transmitting, to the first device, the second SCI through the PSSCH. For example, the second SCI may include a destination ID. For example, whether to use a channel occupancy time (COT) shared from the second device may be determined, based on the destination ID included in the second SCI.

According to an embodiment of the present disclosure, at least one non-transitory computer-readable storage medium storing instructions may be proposed. For example, the instructions, based on being executed by at least one processor, cause a second device to perform operations. For example, the operations may include at least one of: transmitting, to a first device, a first SCI, for scheduling of a physical sidelink shared channel (PSSCH) and second sidelink control information (SCI), through a physical sidelink control channel (PSCCH); and/or transmitting, to the first device, the second SCI through the PSSCH. For example, the second SCI may include a destination ID. For example, whether to use a channel occupancy time (COT) shared from the second device may be determined, based on the destination ID included in the second SCI.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

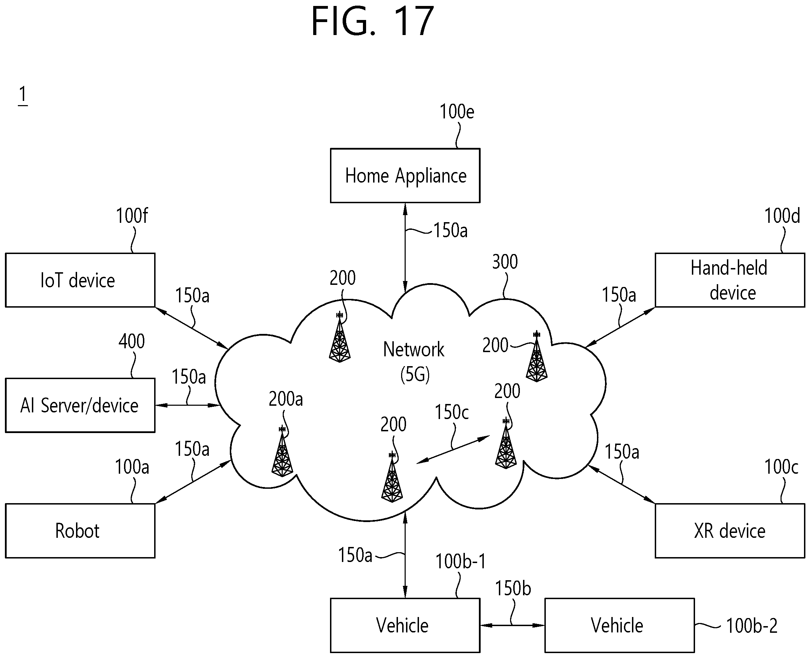

FIG. 17 shows a communication system 1, based on an embodiment of the present disclosure. The embodiment of FIG. 17 may be combined with various embodiments of the present disclosure.

Referring to FIG. 17, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

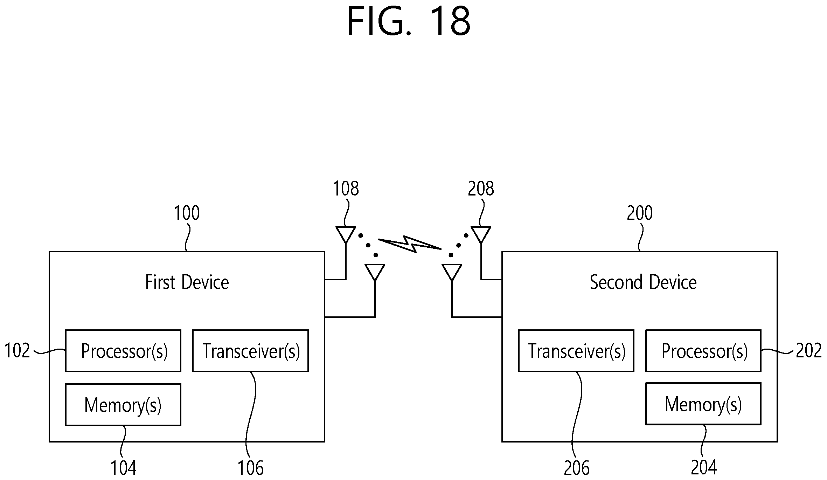

FIG. 18 shows wireless devices, based on an embodiment of the present disclosure. The embodiment of FIG. 18 may be combined with various embodiments of the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

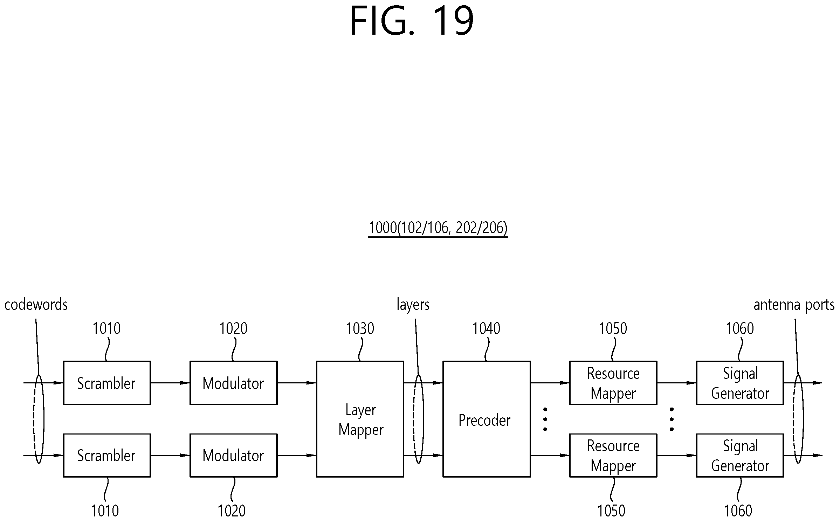

FIG. 19 shows a signal process circuit for a transmission signal, based on an embodiment of the present disclosure. The embodiment of FIG. 19 may be combined with various embodiments of the present disclosure.

Referring to FIG. 19, a signal processing circuit 1000 may include scramblers 1010, modulators 1020, a layer mapper 1030, a precoder 1040, resource mappers 1050, and signal generators 1060. An operation/function of FIG. 19 may be performed, without being limited to, the processors 102 and 202 and/or the transceivers 106 and 206 of FIG. 18. Hardware elements of FIG. 19 may be implemented by the processors 102 and 202 and/or the transceivers 106 and 206 of FIG. 18. For example, blocks 1010 to 1060 may be implemented by the processors 102 and 202 of FIG. 18. Alternatively, the blocks 1010 to 1050 may be implemented by the processors 102 and 202 of FIG. 18 and the block 1060 may be implemented by the transceivers 106 and 206 of FIG. 18.

Codewords may be converted into radio signals via the signal processing circuit 1000 of FIG. 19. Herein, the codewords are encoded bit sequences of information blocks. The information blocks may include transport blocks (e.g., a

# EP 4 496 415 A1

UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 19. For example, the wireless devices (e.g., 100 and 200 of FIG. 18) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

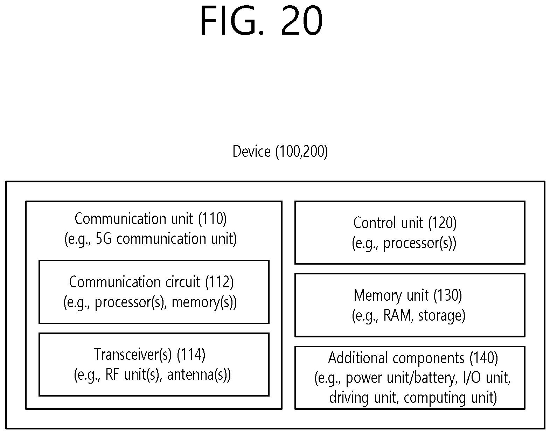

FIG. 20 shows another example of a wireless device, based on an embodiment of the present disclosure. The wireless device may be implemented in various forms according to a use-case/service (refer to FIG. 17). The embodiment of FIG. 20 may be combined with various embodiments of the present disclosure.

Referring to FIG. 20, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 20 will be described in detail with reference to the drawings.

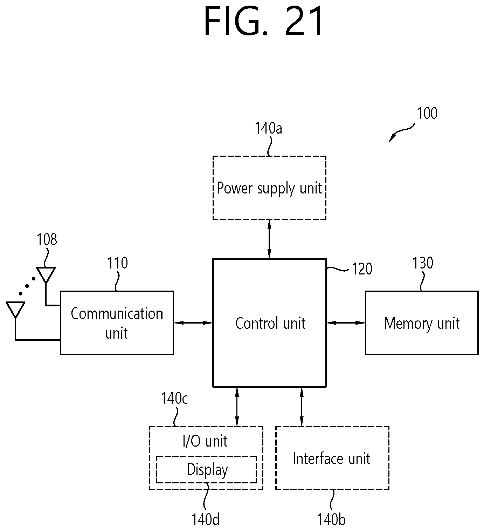

FIG. 21 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 21 may be combined with various embodiments of the present disclosure.

Referring to FIG. 21, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 20, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

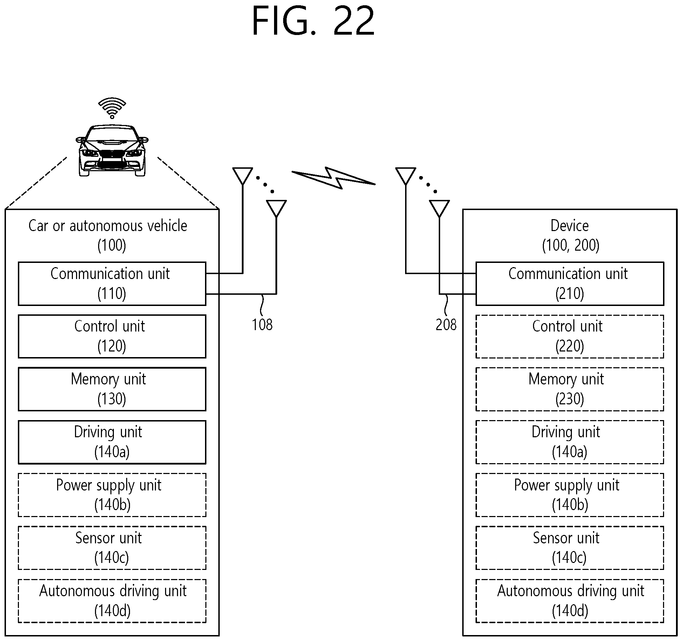

FIG. 22 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 22 may be combined with various embodiments of the present disclosure.

Referring to FIG. 22, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 20, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1. A method for performing wireless communication by a first device, the method comprising:

   receiving, from a second device, a first SCI, for scheduling of a physical sidelink shared channel (PSSCH) and second sidelink control information (SCI), through a physical sidelink control channel (PSCCH);
   receiving, from the second device, the second SCI through the PSSCH,
   wherein the second SCI includes a destination ID; and
   determining whether to use a channel occupancy time (COT) shared from the second device, based on the destination ID included in the second SCI.

2. The method of claim 1, wherein the second SCI further comprises a source ID; and
   wherein, based on the source ID and the destination ID included in the second SCI, whether to use the COT from the second device is determined.

3. The method of claim 1, wherein the destination ID comprises a destination ID related with the first device.

4. The method of claim 1, wherein the second SCI and MAC (medium access control) protocol data unit (PDU) are received from the second device, through the PSSCH, and
   wherein the destination ID includes a destination ID related with the MAC PDU.

5. The method of claim 1, wherein the second SCI further includes information related to a zone ID.

6. The method of claim 5, wherein based on the first device being within a first zone related with the zone ID, whether to use the COT from the second device is determined.

7. The method of claim 1, wherein the second SCI further comprises information related to a communication range requirement.

8. The method of claim 7, wherein based on the first device being within a distance of the communication range requirement from a location of the second device, whether to use the COT from the second device is determined.

9. The method of claim 1, wherein the COT is included within a sidelink (SL) resource pool.

10. The method of claim 1, further comprising:
    performing a transmission within the COT, based on the determination that the COT is used.

11. The method of claim 10, wherein based on reception of hybrid automatic repeat request (HARQ) feedback for the transmission within the COT being expected, HARQ-feedback-enabled transmission is performed.

12. The method of claim 10, wherein based on reception of hybrid automatic repeat request (HARQ) feedback for the transmission within the COT not being expected, a blind transmission is performed.

13. The method of claim 1, further comprising:

selecting a synchronization reference, and
wherein, based on the synchronization reference, whether to use the COT from the second device is determined.

**14.** A first device adapted to perform wireless communication, the first device comprising:

one or more processors;
one or more transceivers; and
one or more memories connected to the one or more processors and storing instructions that, based on being executed, cause the one or more processors to perform operations comprising:

receiving, from a second device, a first SCI, for scheduling of a physical sidelink shared channel (PSSCH) and second sidelink control information (SCI), through a physical sidelink control channel (PSCCH);
receiving, from the second device, the second SCI through the PSSCH,
wherein the second SCI includes a destination ID; and
determining whether to use a channel occupancy time (COT) shared from the second device, based on the destination ID included in the second SCI.

**15.** A processing device adapted to control a first device, the processing device comprising:

one or more processors; and
one or more memories operably connectable to the one or more processors and storing instructions that, based on being executed, cause the one or more processors to perform operations comprising:

receiving, from a second device, a first SCI, for scheduling of a physical sidelink shared channel (PSSCH) and second sidelink control information (SCI), through a physical sidelink control channel (PSCCH);
receiving, from the second device, the second SCI through the PSSCH,
wherein the second SCI includes a destination ID; and
determining whether to use a channel occupancy time (COT) shared from the second device, based on the destination ID included in the second SCI.

**16.** At least one non-transitory computer-readable medium storing instructions that, based on being executed by at least one processor, cause a first device to perform operations comprising:

receiving, from a second device, a first SCI, for scheduling of a physical sidelink shared channel (PSSCH) and second sidelink control information (SCI), through a physical sidelink control channel (PSCCH);
receiving, from the second device, the second SCI through the PSSCH,
wherein the second SCI includes a destination ID; and
determining whether to use a channel occupancy time (COT) shared from the second device, based on the destination ID included in the second SCI.

**17.** A method for performing wireless communication by a second device, the method comprising:

transmitting, to a first device, a first SCI, for scheduling of a physical sidelink shared channel (PSSCH) and second sidelink control information (SCI), through a physical sidelink control channel (PSCCH);
transmitting, to the first device, the second SCI through the PSSCH,
wherein the second SCI includes a destination ID; and
wherein whether to use a channel occupancy time (COT) shared from the second device is determined, based on the destination ID included in the second SCI.

**18.** A second device adapted to perform wireless communication, the second device comprising:

one or more processors;
one or more transceivers; and
one or more memories connected to the one or more processors and storing instructions that, based on being executed, cause the one or more processors to perform operations comprising:

transmitting, to a first device, a first SCI, for scheduling of a physical sidelink shared channel (PSSCH) and second sidelink control information (SCI), through a physical sidelink control channel (PSCCH);

transmitting, to the first device, the second SCI through the PSSCH,
wherein the second SCI includes a destination ID; and
wherein whether to use a channel occupancy time (COT) shared from the second device is determined, based on the destination ID included in the second SCI.

19. A processing device adapted to control a second device, the processing device comprising:

one or more processors; and
one or more memories operably connectable to the one or more processors and storing instructions that, based on being executed, cause the one or more processors to perform operations comprising:

transmitting, to a first device, a first SCI, for scheduling of a physical sidelink shared channel (PSSCH) and second sidelink control information (SCI), through a physical sidelink control channel (PSCCH);
transmitting, to the first device, the second SCI through the PSSCH,
wherein the second SCI includes a destination ID; and
wherein whether to use a channel occupancy time (COT) shared from the second device is determined, based on the destination ID included in the second SCI.

20. At least one non-transitory computer-readable medium storing instructions that, based on being executed by at least one processor, cause a second device to perform operations comprising:

transmitting, to a first device, a first SCI, for scheduling of a physical sidelink shared channel (PSSCH) and second sidelink control information (SCI), through a physical sidelink control channel (PSCCH);
transmitting, to the first device, the second SCI through the PSSCH,
wherein the second SCI includes a destination ID; and
wherein whether to use a channel occupancy time (COT) shared from the second device is determined, based on the destination ID included in the second SCI.

# FIG. 1

# FIG. 2

(a)

(b)

(c)

(d)

PC5-U

PC5-C

EP 4 496 415 A1

# FIG. 3

· · · | One Frame (10ms) | · · ·

· · · | Half-Frame (5ms) | Half-Frame (5ms) | · · ·

· · · | Subframe 0 (1ms) | · · · | Subframe 4 (1ms) | Subframe 5 (1ms) | · · · | Subframe 9 (1ms) | · · ·

Subframe (1ms)

15KHz | Slot 0 (14symbols)

1ms

30KHz | Slot 0 (14symbols) | Slot 1

500us

60KHz | Slot 0 (14symbols) | Slot 1 | Slot 2 | Slot 3

250us

120KHz | Slot 0 (14symbols) | Slot 1 | Slot 2 | Slot 3 | Slot 4 | Slot 5 | Slot 6 | Slot 7

125us

# FIG. 4

Resource grid

A carrier
(up to 3300 subcarriers,
i.e., 275 RBs)

A BWP

1RB=12 subcarriers

1 RE

1subcarrier

1 symbol

l=0 • • •

k=0

EP 4 496 415 A1

# FIG. 5

# FIG. 6

(a)

(b)

# FIG. 7

(a)

(b)

(c)

● : TX UE

⊘ : RX UE

# FIG. 8

EP 4 496 415 A1

# FIG. 9

: Specific slot among Y number of candidate slots

: Slots being targets of sensing

EP 4 496 415 A1

# FIG. 10

Freq.

Number of slots

Slot #M    Slot #M+T1    Slot #M+T1+T2

Time

: Y number of candidate slots

: Slots being targets of sensing

EP 4 496 415 A1

FIG. 11

# FIG. 12

Start CAP — S110

Step 1 — S120

Step 4 (S130): YES → Terminate CAP (S132) → Transmit Tx bust (S134); NO → Step 2

Step 2 — S140

Step 3 (S150): YES; NO → Step 5

Step 5 — S160

Step 6 (S170): NO; YES

# FIG. 13

# FIG. 14

| UE | | | UE(s) |
|----|----|----|----|

1st SCI — S1410

2nd SCI (including destination ID),
MAC PDU — S1412

Perform channel access (procedure) on the first channel — S1420

Based on the channel access performed, obtain a COT — S1430

COT — S1440

Based on destination ID,
determining whether to use the COT shared
from the first UE — S1450

# FIG. 15

| receive, from a second device, a first SCI, for scheduling of a PSSCH and second SCI, through a PSCCH | ~S1510 |

| receive, from the second device, the second SCI through the PSSCH | ~S1520 |

| determine whether to use a channel occupancy time (COT) shared from the second device, based on the destination ID included in the second SCI | ~S1530 |

# FIG. 16

| transmit, to a first device, a first SCI, for scheduling of a PSSCH and second SCI, through a PSCCH | ~S1610 |

| transmit, to a first device, the second SCI through the PSSCH | ~S1620 |

# FIG. 17

# FIG. 18

# FIG. 19

1000(102/106, 202/206)

# FIG. 20

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 21

# FIG. 22

## INTERNATIONAL SEARCH REPORT

| International application No. |
| --- |
| **PCT/KR2023/003600** |

| A. | CLASSIFICATION OF SUBJECT MATTER |
| --- | --- |

**H04W 72/25**(2023.01)i; **H04W 76/11**(2018.01)i; **H04L 1/18**(2006.01)i; **H04W 92/18**(2009.01)i

According to International Patent Classification (IPC) or to both national classification and IPC

| B. | FIELDS SEARCHED |
| --- | --- |

Minimum documentation searched (classification system followed by classification symbols)

H04W 72/25(2023.01); H04L 1/18(2006.01); H04W 72/10(2009.01); H04W 74/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PSCCH(physical sidelink control channel), PSSCH(physical sidelink shared channel), SCI(sidelink control information), 데스티네이션(destination ID), COT(channel occupancy time), 공유(sharing)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2022-0070925 A1 (QUALCOMM INCORPORATED) 03 March 2022 (2022-03-03)<br>See paragraph [0147]; and claims 26-27. | 1-20 |
| A | INTEL CORPORATION. Remaining Details for Enabling URLLC/IIoT in Unlicensed Band.<br>R1-2111490, 3GPP TSG RAN WG1 Meeting #107-e. 06 November 2021.<br>See sections 1-5. | 1-20 |
| A | WO 2020-168320 A1 (APPLE INC.) 20 August 2020 (2020-08-20)<br>See paragraphs [0033]-[0211]; and figures 1-14. | 1-20 |
| A | WO 2021-208031 A1 (QUALCOMM INCORPORATED) 21 October 2021 (2021-10-21)<br>See paragraphs [0037]-[0150]; and figures 1-13. | 1-20 |
| A | WO 2021-212256 A1 (QUALCOMM INCORPORATED) 28 October 2021 (2021-10-28)<br>See paragraphs [0064]-[0206]; and figures 1-15. | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 June 2023** | **26 June 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/003600**

| Patent document cited in search report | | | Publication date (day/month/year) | Patent family member(s) | | | Publication date (day/month/year) |
|---|---|---|---|---|---|---|---|
| US | 2022-0070925 | A1 | 03 March 2022 | None | | | |
| WO | 2020-168320 | A1 | 20 August 2020 | CN | 113455092 | A | 28 September 2021 |
| | | | | EP | 3906746 | A1 | 10 November 2021 |
| | | | | US | 2022-0167407 | A1 | 26 May 2022 |
| WO | 2021-208031 | A1 | 21 October 2021 | CN | 115380488 | A | 22 November 2022 |
| | | | | EP | 4136792 | A1 | 22 February 2023 |
| WO | 2021-212256 | A1 | 28 October 2021 | None | | | |

Form PCT/ISA/210 (patent family annex) (July 2022)